# EUROPÄISCHE PATENTSCHRIFT

(11) **EP 1 959 000 B1**
(45) Veröffentlichungstag und Bekanntmachung des Hinweises auf die Patenterteilung: **07.07.2010**
(21) Anmeldenummer: 07023046.1
(22) Anmeldetag: 28.11.2007
(51) Int. Cl.: C09K 19/32, C09K 19/42

(54) **Flüssigkristallines Medium**
Liquid crystalline medium
Milieu cristallin liquide

(30) Priorität: 19.02.2007 DE 102007008462
(43) Veröffentlichungstag der Anmeldung: 20.08.2008
(73) Patentinhaber: Merck Patent GmbH, 64293 Darmstadt (DE)
(72) Erfinder: Klasen-Memmer, Melanie, Dr., 67259 Heuchelheim (DE); Bremer, Matthias, Dr., 64295 Darmstadt (DE); Saito, Izumi, 64295 Darmstadt (DE)

(56) Entgegenhaltungen:
- EP-A- 1 369 406
- EP-A- 1 544 187
- EP-A- 1 591 513
- DE-A1- 2 949 080
- DE-A1- 4 227 772
- DE-A1- 19 522 195

## Beschreibung

Die Erfindung betrifft ein flüssigkristallines Medium auf der Basis eines Gemisches von polaren Verbindungen, welches mindestens eine Verbindung der Formel I, 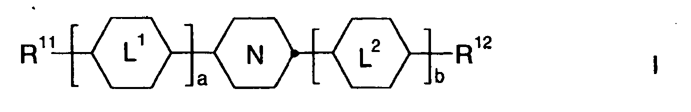 worin
R¹¹ und R¹² jeweils unabhängig voneinander einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 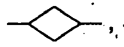 -C≡C-, -CF₂O-, -OC-O- oder -O-CO- so ersetzt sein können, dass O-Atome nicht direkt miteinander verknüpft sind, 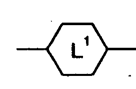 und 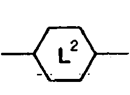 jeweils unsabhängig voneinnander 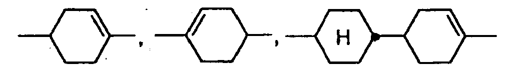 oder 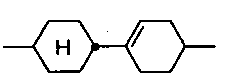 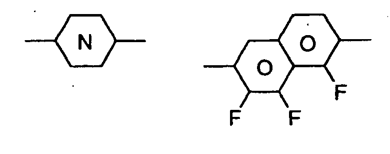 oder 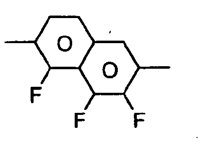
a und b jeweils unabhängig voneinander 0 oder 1, wobei a + b ≥ 1 ist,
bedeuten,
enthält.

Derartige Medien sind insbesondere für elektrooptische Anzeigen mit einer Aktivmatrix-Addressierung basierend auf dem ECB-Effekt sowie für IPS (In Plane Switching) und FFS-Anzeigen (Fringe Field Switching) zu verwenden. Vorzugsweise besitzt das erfindungsgemäße Medium eine negative dielektrische Anisotropie.

Anzeigen, die den ECB-Effekt verwenden haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Avanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen neben IPS- (In Plane Switching) Anzeigen (z.B.: Yeo, S.D., Vortrag 15.3: "A LC Display for the TV Application", SID 2004 International Symposium, Digest of Technical Papers, XXXV, Buch II, S. 758 & 759), und den lange bekannten neben TN- (Twisted Nematic) Anzeigen, als eine der drei zur Zeit wichtigsten neueren Typen von Flüssigkristallanzeigen insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

ECB-Anzeigen verwenden wie ASV-Anzeigen flüssigkristalline Medien mit negativer dielektrischer Anisotropie (Δε), wohingegen TN- und bislang alle gebräuchlichen IPS-Anzeigen flüssigkristalline Medien mit positiver dielektrischer Anisotropie verwenden.

In derartigen Flüssigkristallanzeigen werden die Flüssigkristalle als Dielektrika verwendet, deren optische Eigenschaften sich bei Anlegen einer elektrischen Spannung reversibel ändern.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

Insbesondere müssen die Schaltzeiten der Flüssigkristallmedien in den Anzeigen verbessert, also verringert, werden. Dies ist besonders für Anzeigen für Fernseh- oder Multi-Media Anwendungen wichtig. Zur Verbesserung der Schaltzeiten ist in der Vergangenheit wiederholt vorgeschlagen worden, die Rotationsviskosität der Flüssigkristallmedien (γ₁) zu optimieren, also Medien mit einer möglichst geringen Rotationsviskosität zu realisieren. Die dabei erzielten Ergebnisse sind jedoch nicht ausreichend für viele Anwendungen und lassen es daher wünschenswert erscheinen, weitere Optimierungsansätze aufzufinden.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von 2 bis 25, vorzugsweise 3 bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Da bei Anzeigen im allgemeinen, also auch bei Anzeigen nach diesen erwähnten Effekten, die Betriebsspannung möglichst gering sein soll, werden Flüssigkristallmedien eingesetzt, die in der Regel überwiegend aus Flüssigkristallverbindungen zusammengesetzt sind, die alle das gleiche Vorzeichen der dielektrischen Anisotropie aufweisen und einen möglichst großen Betrag der dielektrischen Anisotropie haben. Es werden in der Regel allenfalls geringere Anteile an neutralen Verbindungen und möglichst keine Verbindungen dem Medium entgegengesetzten Vorzeichen der dielektrischen Anisotropie eingesetzt. Bei den Flüssigkristallmedien mit negativer dielektrischer Anisotropie für ECB-Anzeigen werden somit überwiegend Verbindungen mit negativer dielektrischer Anisotropie eingesetzt. Die eingesetzten Flüssigkristallmedien bestehen in der Regel aus ≥ 40 Gew.% Flüssigkristallverbindungen mit negativer dielektrischer Anisotropie.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde MFK-Anzeigen, nicht nur für Monitor- und TV-Anwendungen sondern auch für Mobiltelefone und Navigationssysteme, welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen. Insbesondere muss für Mobiltelefone und Navigationssysteme gewährleistet sein, dass diese auch bei extrem hohen und extrem niedrigen Temperaturen arbeiten.

Überraschenderweise wurde nun gefunden, dass diese Aufgabe gelöst werden kann, wenn man in diesen Anzeigeelementen nematische Flüssigkristallmischungen verwendet, die mindestens eine Verbindung der Formel I enthalten. Diese Flüssigkristallmischungen zeichnen sich durch hohe Werte für die Doppelbrechung (Δn) aus und sind daher u.a. hervorragend geeignet für Bildschirme von Fernsehgeräten, Computern, wie z.B. Notebooks oder Desktops, Schaltzentralen, aber auch von Glückspielgeräten, elektrooptischen Anzeigen, wie z.B. von Uhren, Taschenrechnern, elektronischen Taschenspielen, Schachcomputern, tragbaren Datenspeichern, wie PDAs (Personal Digital Assistants) oder von Mobiltelefonen und Navigationsgeräten, insbesondere für alle Displays, auf denen bewegte Bilder dargestellt werden.

Gegenstand der Erfindung ist somit ein flüssigkristallines Medium auf der Basis eines Gemisches von polaren Verbindungen, welches mindestens eine Verbindung der Formel I enthält.

Naphthalinderivate sind beispielsweise aus der EP 1 591 513 A1, EP 1 544 187 A1, EP 1 369 406 A1, DE 195 22 195 A1, DE 42 27 772 A1 und DE 29 49 080 A1 bekannt. Die Verbindungen der Formel I und deren Einsatz in flüssigkristallinen Mischungen werden im Stand der Technik nicht beschrieben.

Die erfindungsgemäßen Mischungen zeigen sehr breite nematische Phasenbereiche mit Klärpunkten ≥ 65 °C, sehr günstige Werte für die kapazitive Schwelle, relativ hohe Werte für die Holding Ratio und gleichzeitig sehr gute Tieftemperaturstabilitäten bei -30 °C und -40 °C. Weiterhin zeichnen sich die erfindungsgemäßen Mischungen durch niedrige Rotationsviskositäten γ₁ aus.

Einige bevorzugte Ausführungsformen der erfindungsgemäßen Mischungen werden im folgenden genannt:
a) R¹¹ und R¹² in den Verbindungen der Formel I bedeuten vorzugsweise Alkyl und/oder Alkenyl mit bis zu 6 C-Atomen, insbesondere geradkettiges Alkyl, Vinyl, 1 E-Alkenyl oder 3-Alkenyl.
Falls R¹¹ und/oder R¹² Alkyl bedeuten, können die Alkylreste gleich oder verschieden sein. Falls R¹¹ und/oder R¹² einen Alkylrest bedeuten, so ist er vorzugsweise CH₃, C₂H₅, n-C₃H₇, n-C₄H₉, n-C₅H₁₁, ferner n-C₆H₁₃.
Falls R¹¹ und/oder R¹² Alkenyl bedeuten, können die Alkenylreste gleich oder verschieden sein. Falls R¹¹ und/oder R¹² einen Alkenylrest bedeuten, so ist er vorzugsweise CH₂=CH, CH₃-CH=CH, C₃H₇-CH=CH, CH₂=CH-C₂H₄ oder CH₃-CH=CH-C₂H₄.
b) In der Formel I bedeuten die Ringe L¹ und L² vorzugsweise 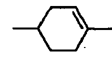 oder 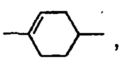 insbesondere 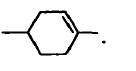 a + b bedeuten vorzugsweise 0 oder 1, wobei insbesondere a + b = 1 ist. Besonders bevorzugt bedeuten a = 1 und b = 0.
c) Flüssigkristallines Medium, welches ein, zwei, drei, vier oder mehr, vorzugsweise ein, zwei oder drei, Verbindungen der Formel I enthält.
d) Flüssigkristallines Medium, wobei der Anteil an Verbindungen der Formel I im Gesamtgemisch mindestens 2 Gew.%, vorzugsweise mindestens 4 Gew.%, besonders bevorzugt 2-20 %, beträgt.
e) Flüssigkristallines Medium, welches mindestens eine Verbindung ausgewählt aus den Teilformeln I1 bis I16 enthält, 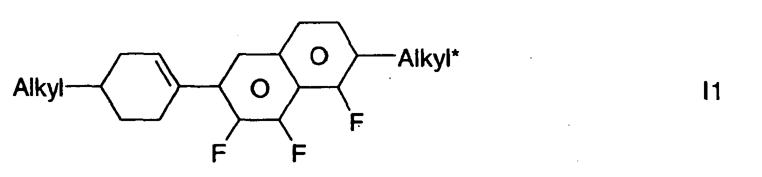 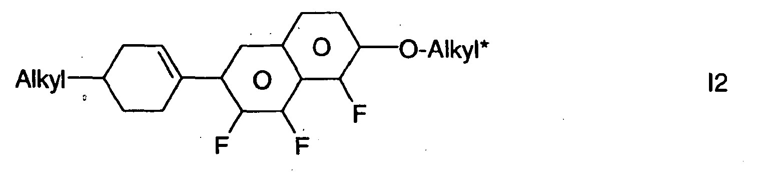 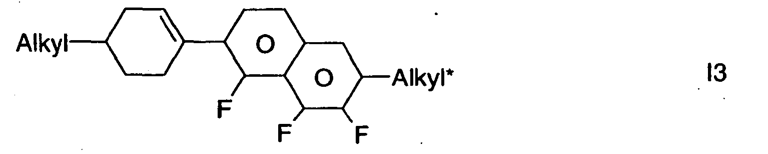 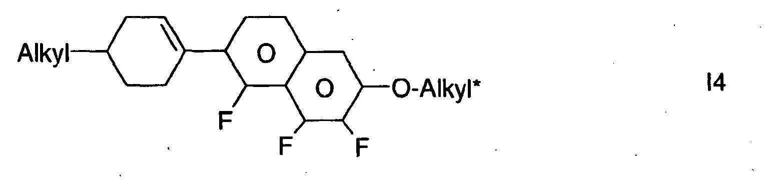 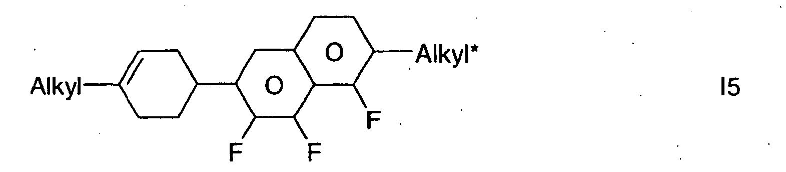 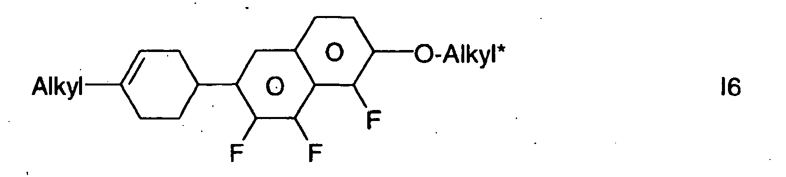 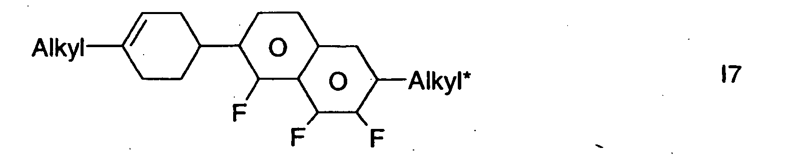 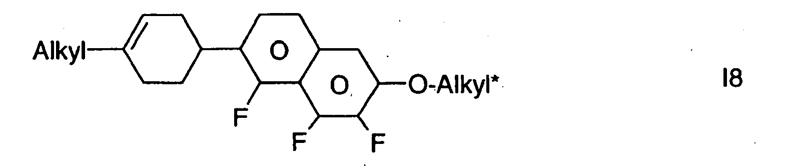 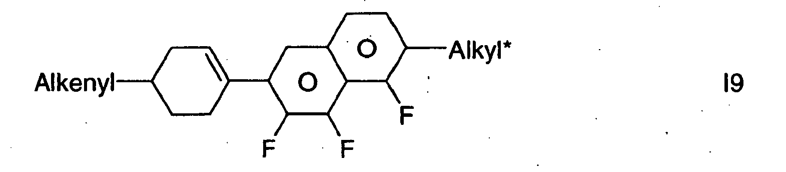 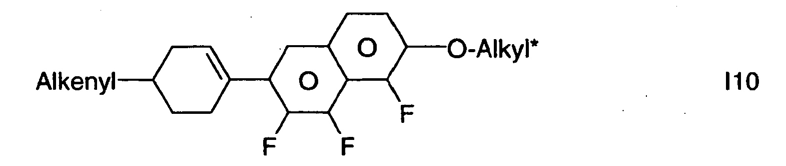 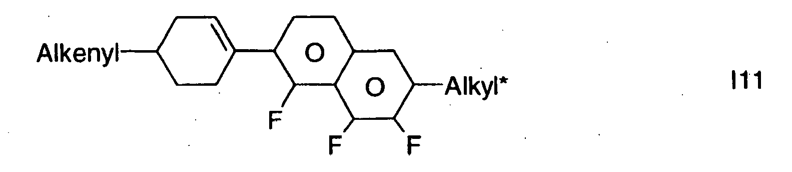 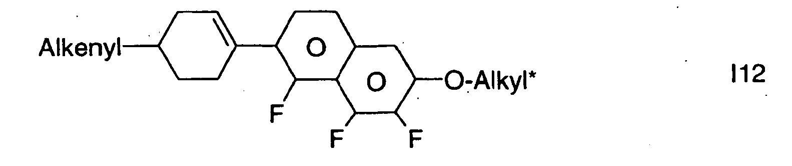 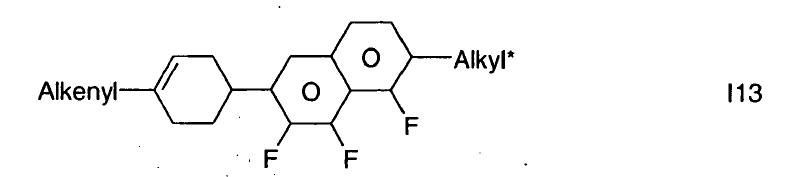 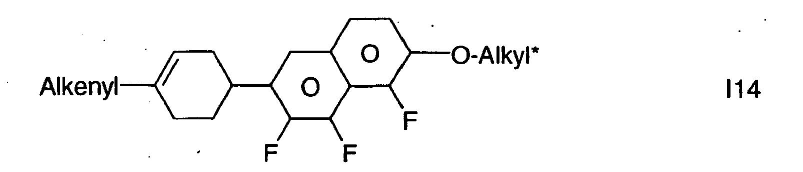 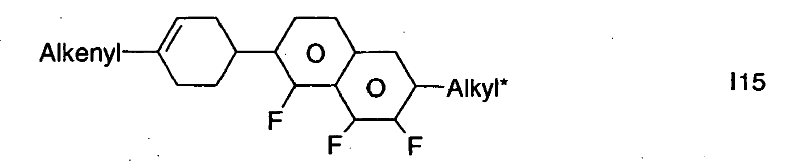 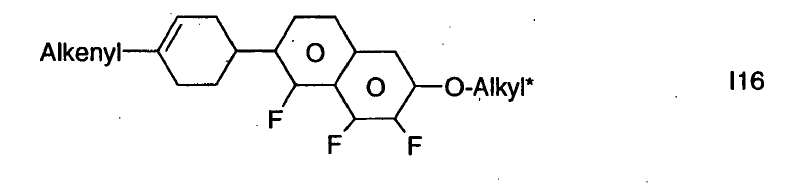 worin
Alkyl und Alkyl* jeweils unabhängig voneinander geradkettiger Alkylrest mit 1-6 C-Atomen bedeuten. Alkenyl bedeutet einen geradkettigen Alkenylrest mit 2-6 C-Atomen.
f) Flüssigkristallines Medium, welches zusätzlich eine oder mehrere Verbindungen der Formeln IIA und/oder IIB enthält, 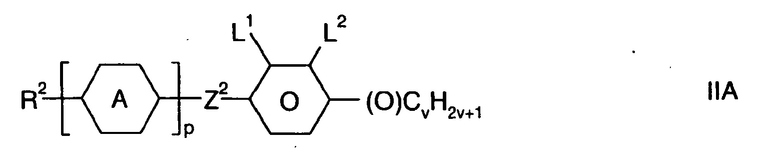 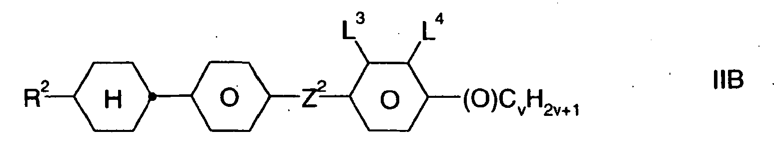 worin 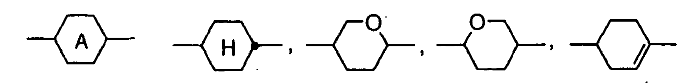 oder 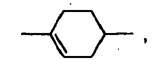
- R²: die Bedeutung von R¹¹ hat,
- Z²: Einfachbindung, -CH=CH-, -CH₂O-, -OCH₂-, -CF₂O-, -OCF₂-, -O-, -CH₂- oder -CH₂CH₂-, vorzugsweise eine Einfachbindung,
- p: 1 oder 2, und
- L¹⁻⁴: jeweils unabhängig voneinander F, CI, OCF₃, CF₃, CH₃, CH₂F, CHF₂, vorzugsweise L¹ = L² = F bzw. L³ = L⁴ = F,
- v: 1 bis 6
bedeuten.
Die Bedeutungen von R², Z² und v in den Verbindungen IIA und IIB können gleich oder verschieden sein.
Besonders bevorzugte Verbindungen der Formel IIA sind die Verbindungen der Formeln IIA-1 bis IIA-22, 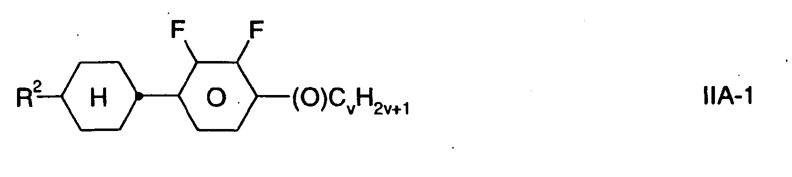 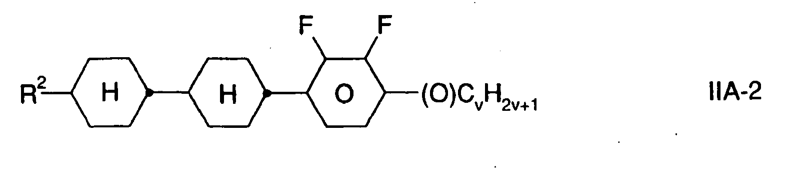 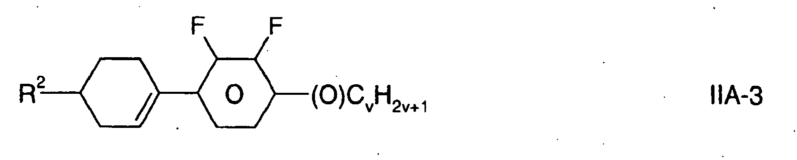 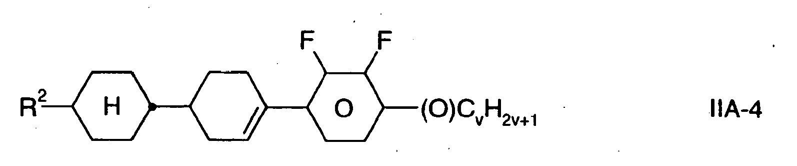 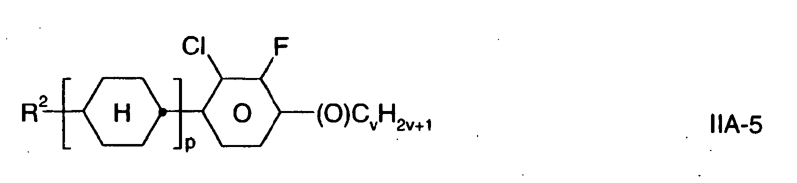 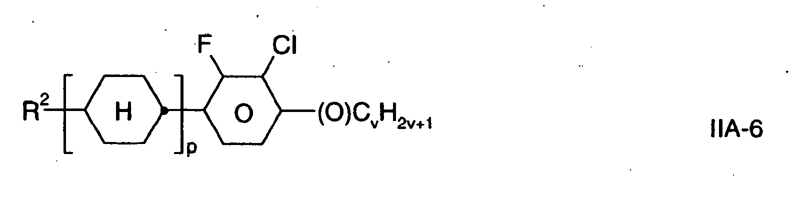 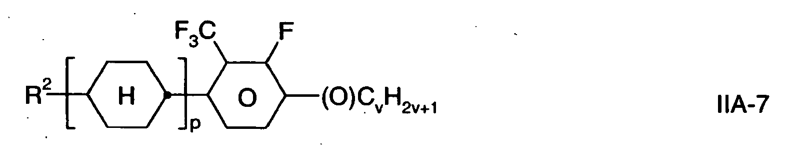 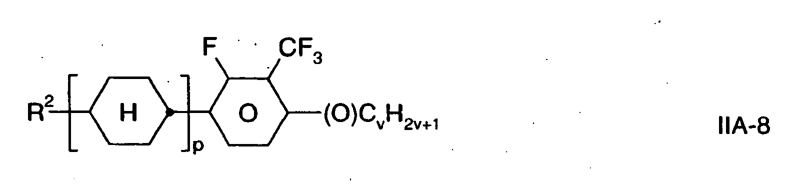 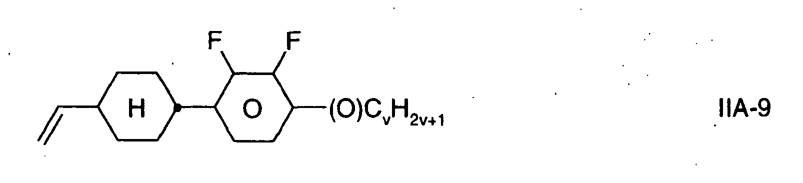 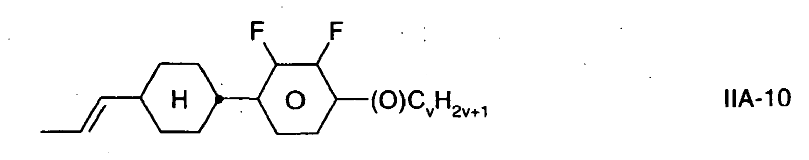 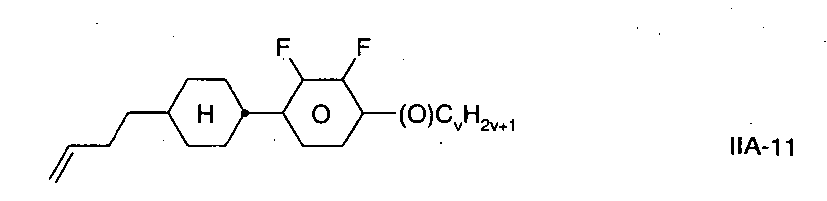 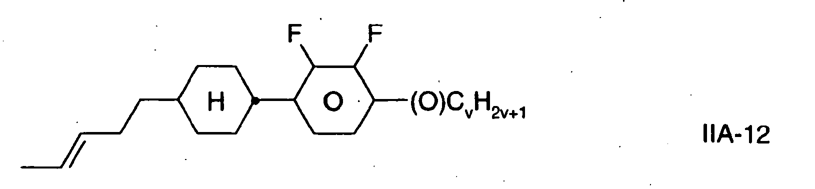 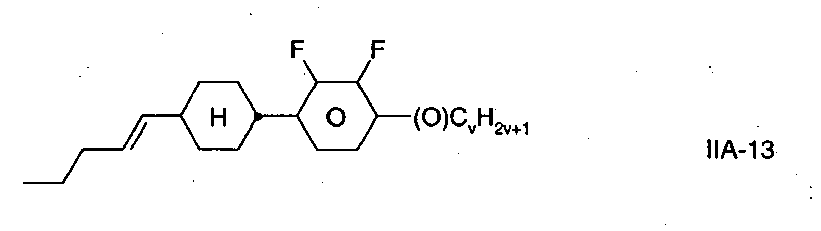 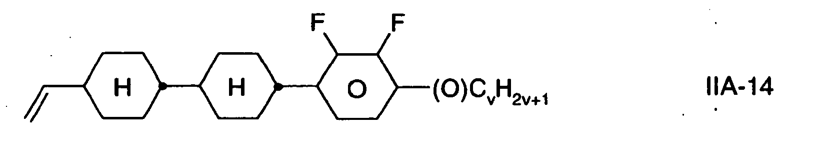 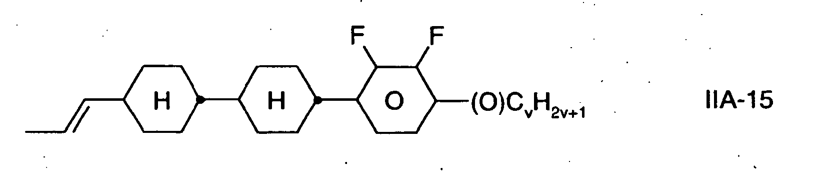 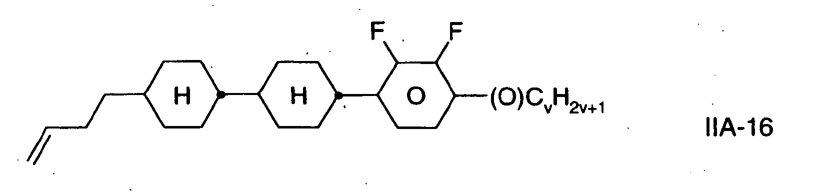 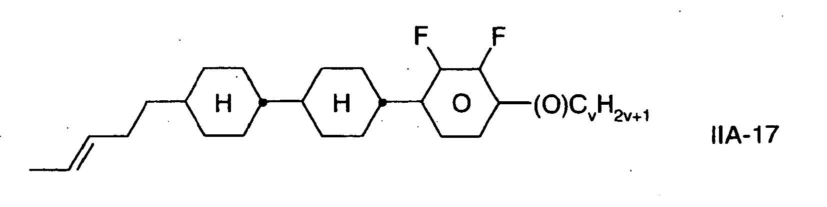 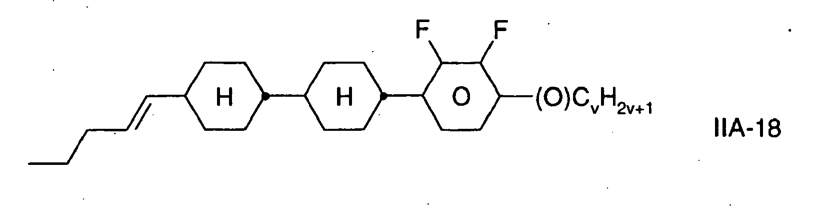 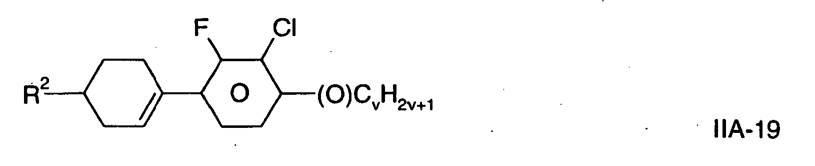 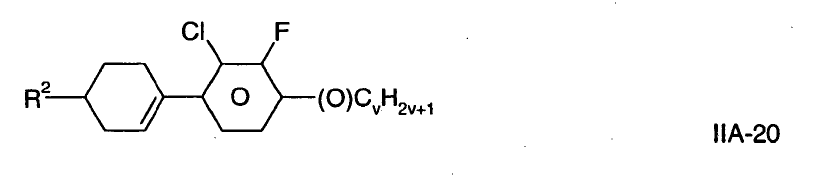 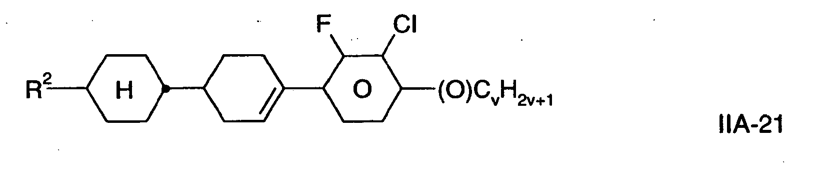 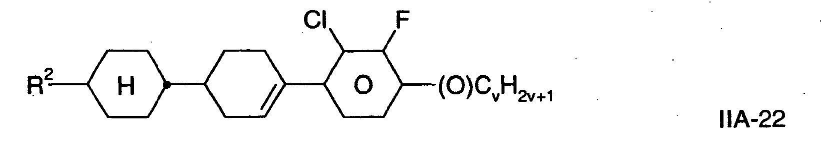 worin R² und v die oben angegebenen Bedeutungen haben.
Insbesondere bevorzugt sind die Verbindungen der Formeln IIA-1 und IIA-2, ferner IIA-3 und IIA-4. In den Verbindungen der Formel IIA bedeutet R² vorzugsweise geradkettiges Alkyl oder Alkenyl, insbesondere CH₂=CH, CH₃CH=CH, CH₂=CHCH₂CH₂, CH₃CH=CHC₂H₄, C₃H₇CH=CH, CH₃, C₂H₅, n-C₃H₇, n-C₄H₉, n-C₅H₁₁.
Besonders bevorzugte Verbindungen der Formel IIB sind die Verbindungen der Formeln IIB-1 bis IIB-7, 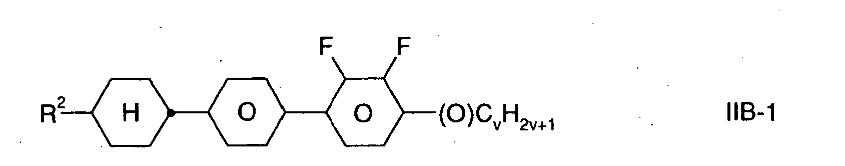 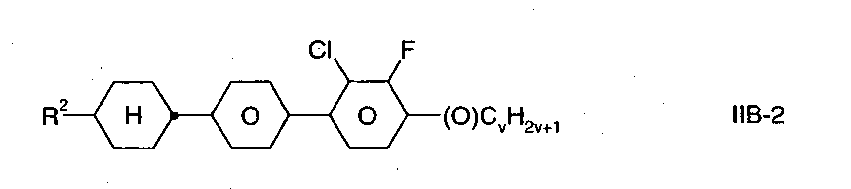 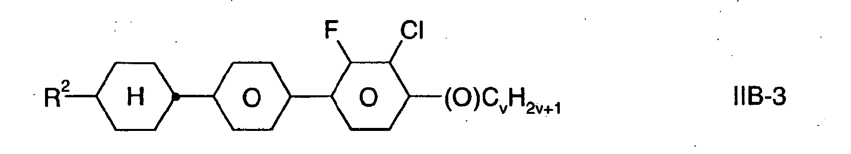 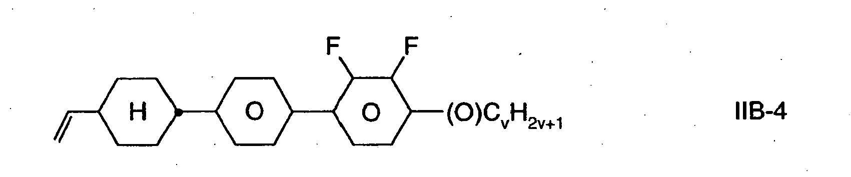 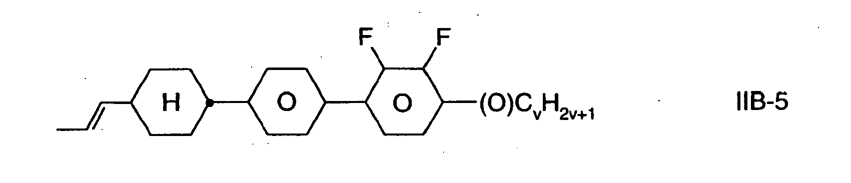 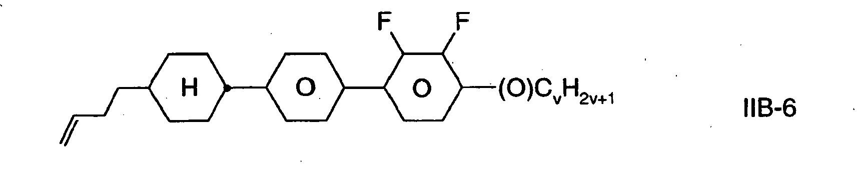 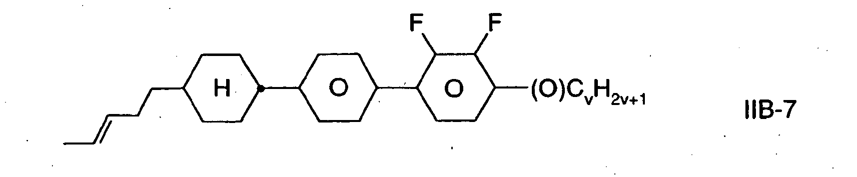 worin R² und v die oben angegebenen Bedeutungen haben.
Insbesondere bevorzugt sind die Verbindungen der Formel IIB-1. In den Verbindungen der Formel IIB-1 bedeutet R² vorzugsweise geradkettiges Alkyl oder Alkenyl, insbesondere CH₂=CH, CH₃CH=CH, CH₂=CHCH₂CH₂, CH₃CH=CHC₂H₄, C₃H₇CH=CH, CH₃, C₂H₅, n-C₃H₇, n-C₄H₉, n-C₅H₁₁.
In den Verbindungen der Formeln IIA und IIB bedeutet Z² vorzugsweise eine Einfachbindung, ferner -CH₂CH₂-.
g) Flüssigkristallines Medium, welches zusätzlich eine oder mehrere Verbindungen der Formel III enthält, 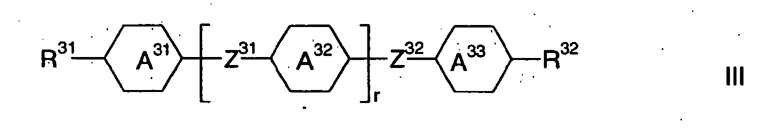 worin
R³¹ und R³² jeweils unabhängig voneinander einen geradkettigen Alkylrest mit 1 bis 12 C-Atomen, worin eine oder mehrere CH₂-Gruppen durch jeweils unabhängig voneinander einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 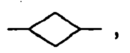 -C=C-, -OC-O- oder -O-CO- so ersetzt sein können, dass O-Atome nicht direkt miteinander verknüpft sind, 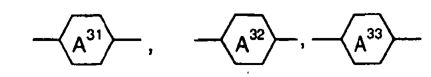 jeweils unabhängig voneinander, 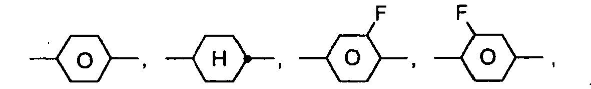 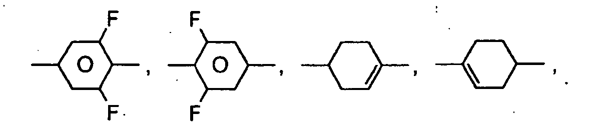 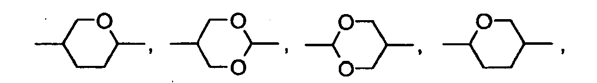 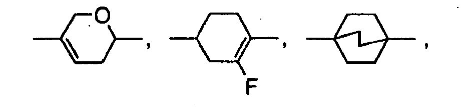
r 0, 1 oder 2,
Z³¹ und Z³² jeweils unabhängig voneinander eine Einfachbindung, -CH₂CH₂-, -C≡C-, -CH=CH-, -CF₂O-, -OCF₂-, -CF=CF-, -CF=CH-, -CH=CF-, -CH₂CF₂-, -CF₂CH₂-, -COO-, -OCO-, -CH₂O-, -OCH₂-, -(CH₂)₄-
bedeuten.
h) Flüssigkristallines Medium, wobei der Anteil an Verbindungen der Formeln IIA und/oder IIB im Gesamtgemisch mindestens 20 Gew.% beträgt.
i) Flüssigkristallines Medium, wobei der Anteil der Verbindungen der Formel III im Gesamtgemisch mindestens 5 Gew.% beträgt.
j) Flüssigkristallines Medium, welches zusätzlich eine oder mehrere Verbindungen ausgewählt aus den Formeln IIIa bis IIIo enthält, 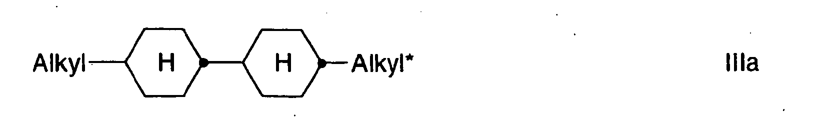 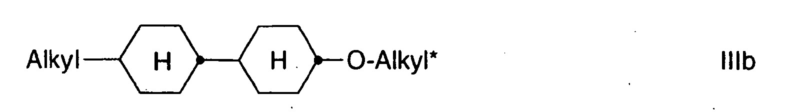 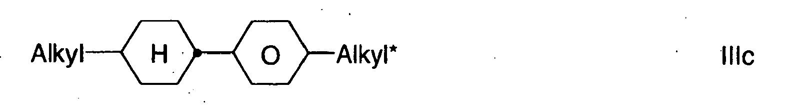 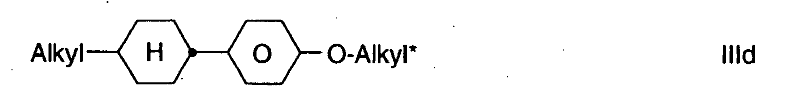 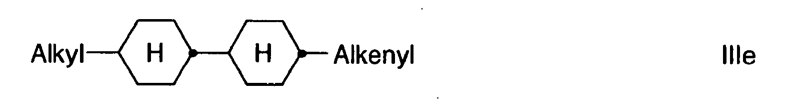 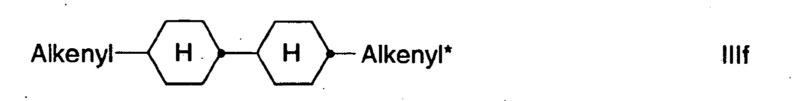 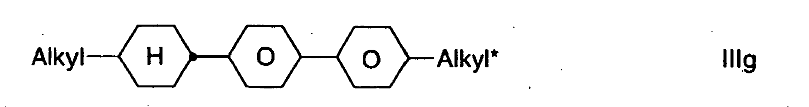 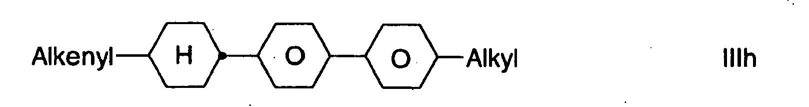 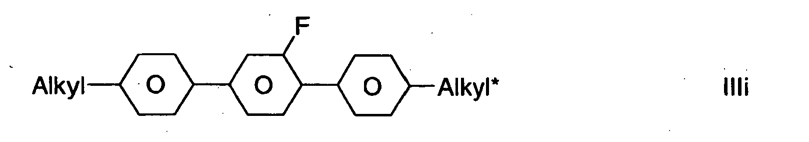 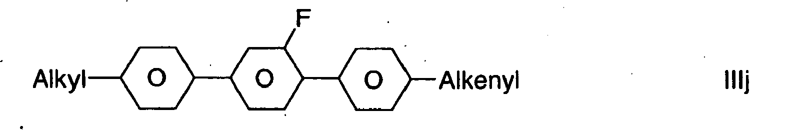 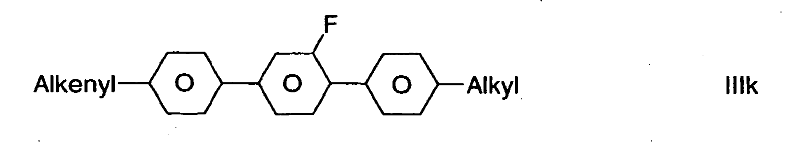 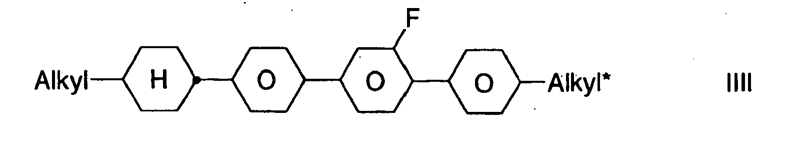 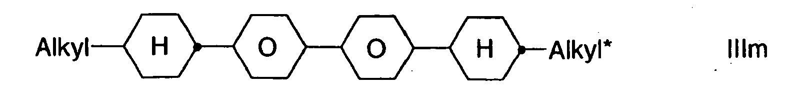 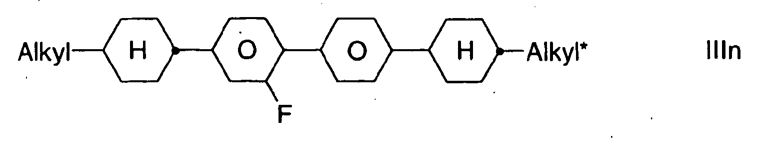 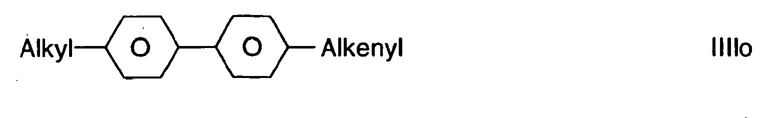 worin
- Alkyl und Alkyl*: jeweils unabhängig voneinander einen geradkettigen Alkylrest mit 1-6 C-Atomen,
- Alkoxy: einen geradkettigen Alkoxyrest mit 1-6 C-Atomen,
- Alkenyl und Alkenyl*: jeweils unabhängig voneinander einen geradkettigen Alkenylrest mit 2-6 C-Atomen,
bedeuten.
Besonders bevorzugt enthält das erfindungsgemäße Medium Verbindungen der Formel IIIe in Mengen von > 20 Gew.%, insbesondere > 25 Gew.%, ganz besonders bevorzugt ≥ 30 Gew.%, insbesondere Verbindungen ausgewählt aus den Verbindungen der Formel 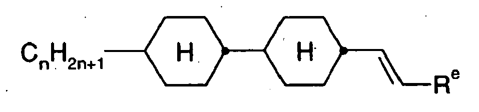 worin
n = 3, 4, 5 und R^{e} H oder CH₃
bedeuten.
Vorzugsweise enthält das erfindungsgemäße Medium mindestens eine Verbindung der Formeln IIIa, IIIb, IIIe, IIIf, IIIi, IIIj, IIIk, IIIl, IIIm, IIIn und IIIo.
Besonders bevorzugte Verbindungen der Formeln IIIe und IIIf werden nachfolgend genannt: 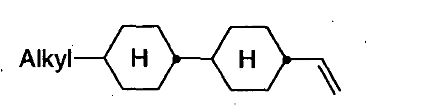 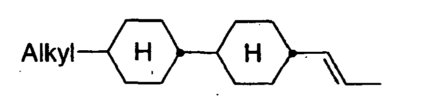 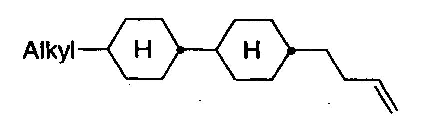 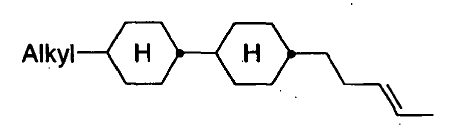 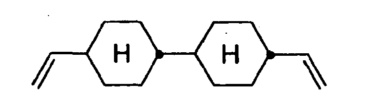 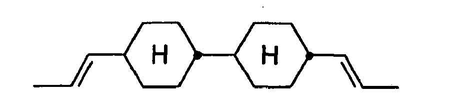 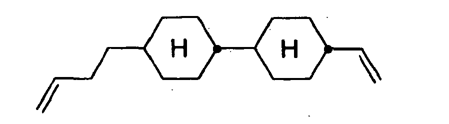 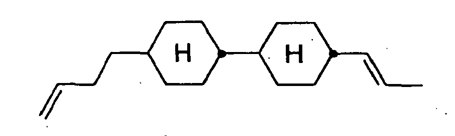 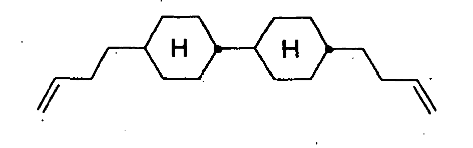 In den Verbindungen der Formel III bedeuten R³¹ und R³² jeweils unabhängig voneinander vorzugsweise geradkettiges Alkyl, Alkoxy und Alkenyl mit jeweils bis zu 6 C-Atomen. Z³¹ und Z³² bedeuten vorzugsweise unabhängig voneinander eine Einfachbindung, ferner -COO- oder -CH₂O-. Die Ringe A³¹, A³², A³³ bedeuten vorzugsweise jeweils unabhängig voneinander 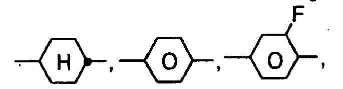 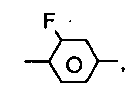 ferner 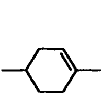 oder 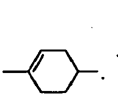
k) Flüssigkristallines Medium, welches

| | |
|---|---|
| 2-20 | Gew.% einer oder mehrerer Verbindungen der Formel I und |
| 20-80 | Gew.% einer oder mehrerer Verbindungen der Formeln IIA und/oder IIB |

enthält bzw. daraus besteht.
l) Flüssigkristallines Medium, welches zusätzlich eine oder mehrere Vierkernverbindungen der Formeln, 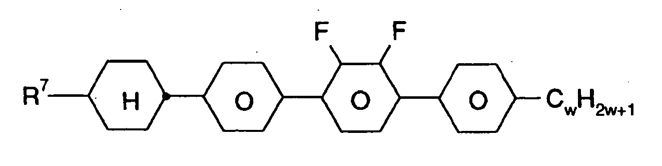 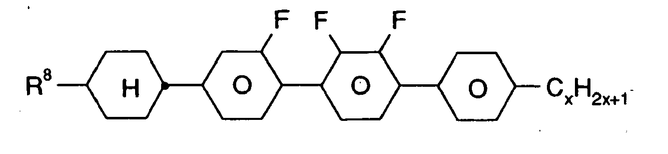 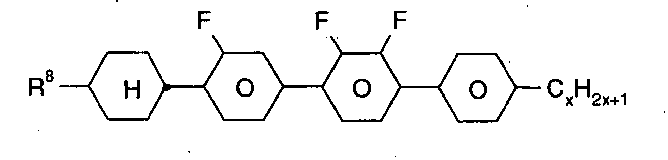 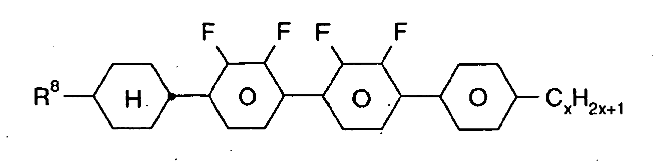 worin
- R⁷ und R⁸: jeweils unabhängig voneinander eine der in Anspruch 1 für R¹¹ angegebenen Bedeutung haben, und
- w und x: jeweils unabhängig voneinander 1 bis 6
bedeuten,
enthält.
m) Flüssigkristallines Medium, welches zusätzlich eine oder mehrere Verbindungen der Formeln 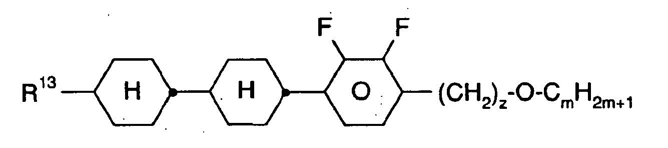 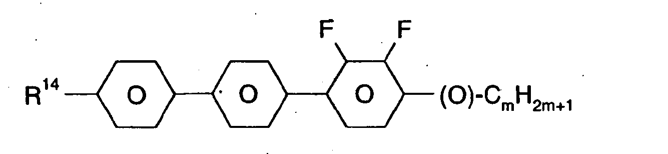 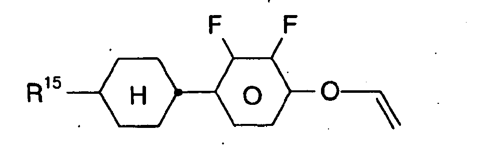 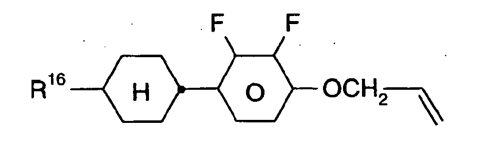 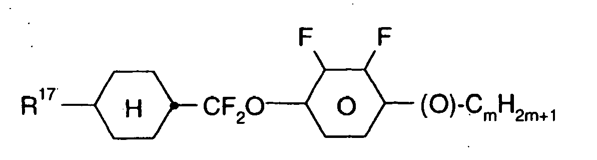 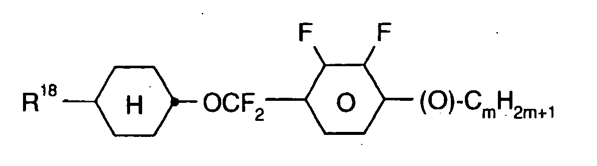 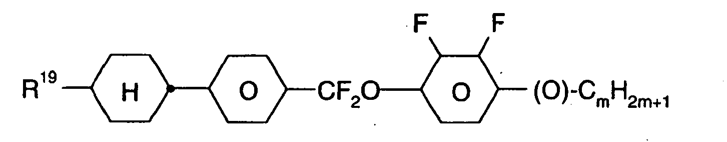 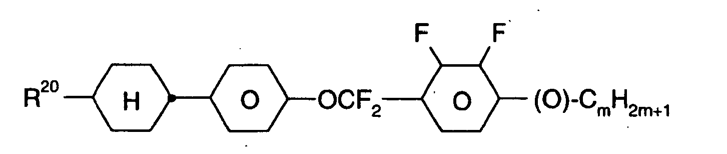 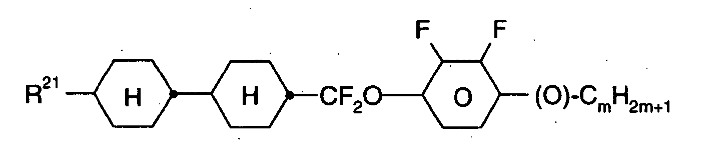 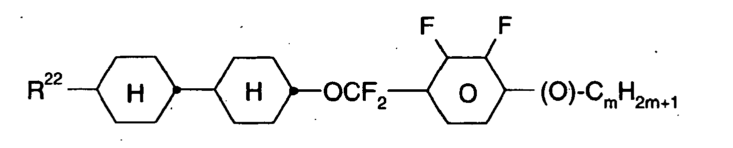 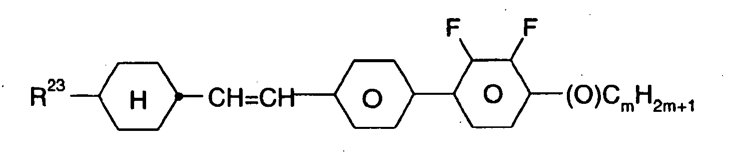 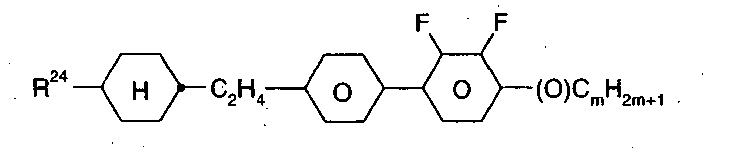 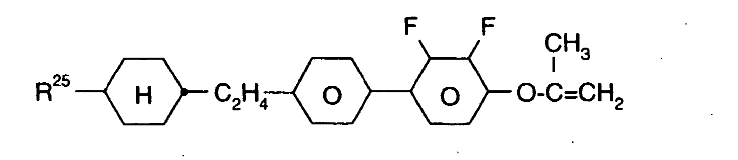 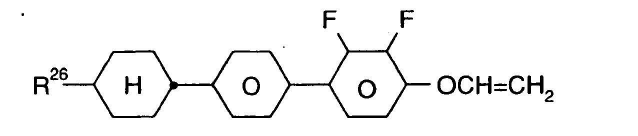 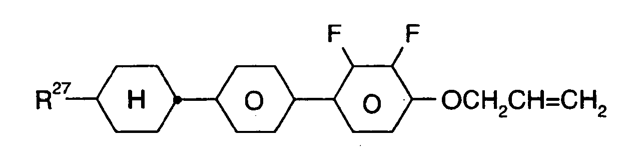 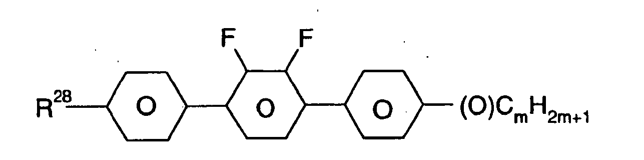 enthält,
worin R¹³-R²⁸ jeweils unabhängig voneinander, die für R¹¹ angegebenen Bedeutungen haben, und z und m jeweils unabhängig voneinander 1-6 bedeuten.
n) Flüssigkristallines Medium, welches zusätzlich eine oder mehrere Verbindungen der Formel B-1, 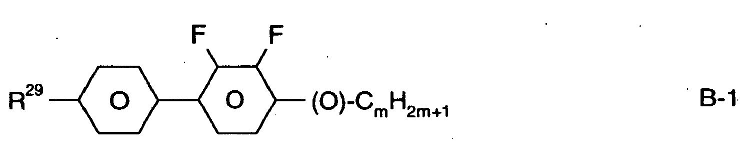 vorzugsweise in Mengen von > 3 Gew.%, insbesondere ≥ 5 Gew.%, und ganz besonders bevorzugt von 5-25 Gew.% enthält,
wobei
R²⁹ die für R¹¹ angegebenen Bedeutungen hat und m 1-6 bedeutet.
o) Flüssigkristallines Medium enthaltend zusätzlich ein oder mehrere Verbindungen der Formel T-1 bis T-22, 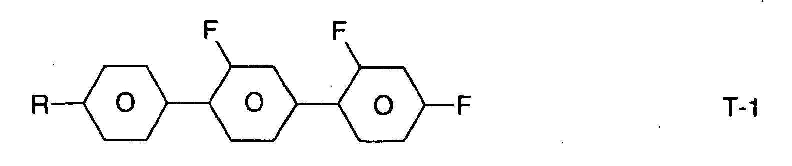 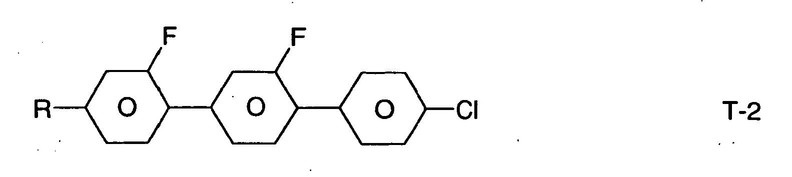 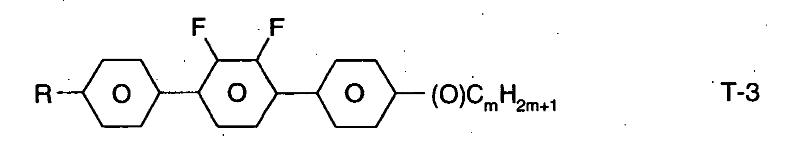 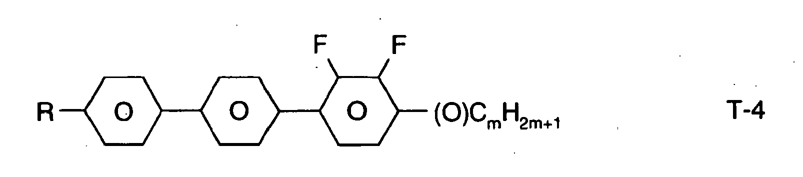 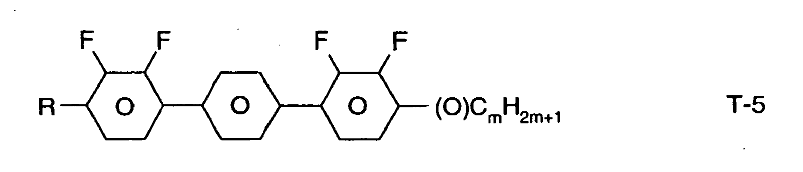 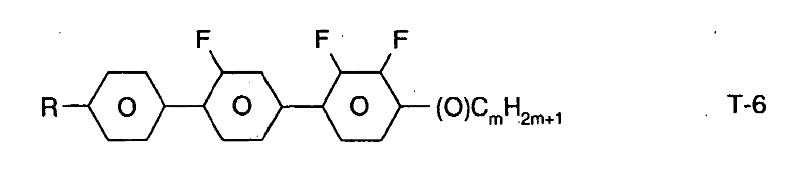 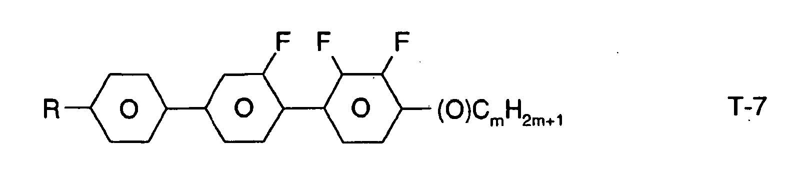 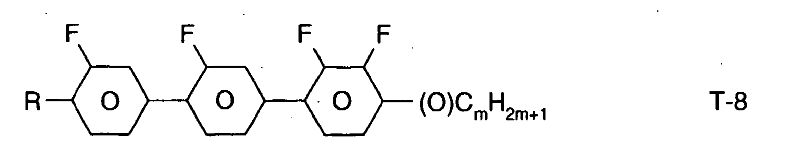 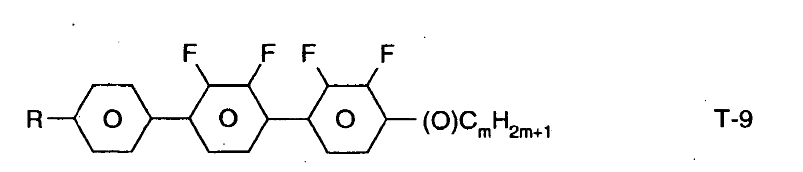 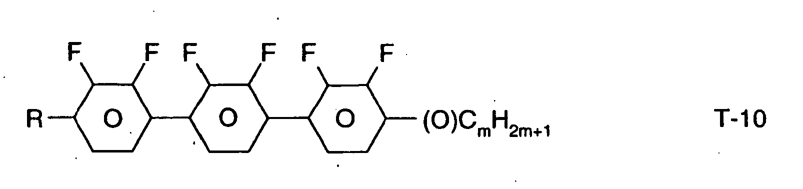 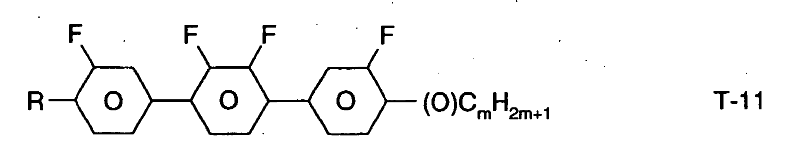 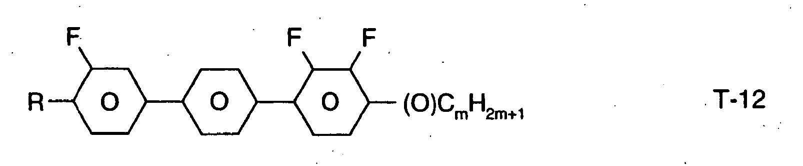 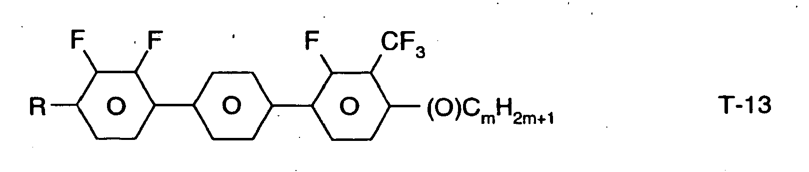 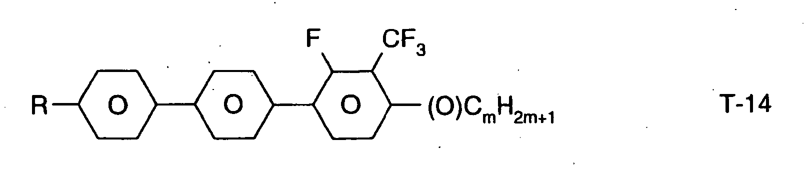 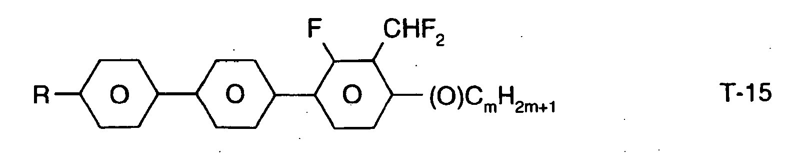 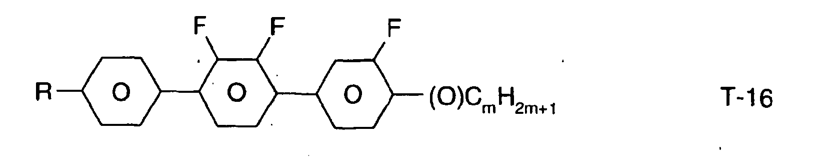 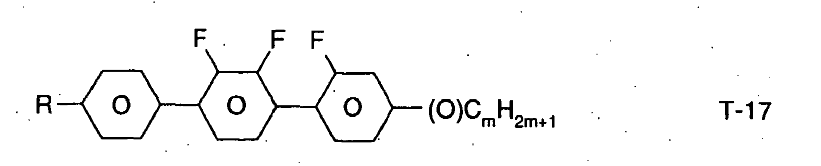 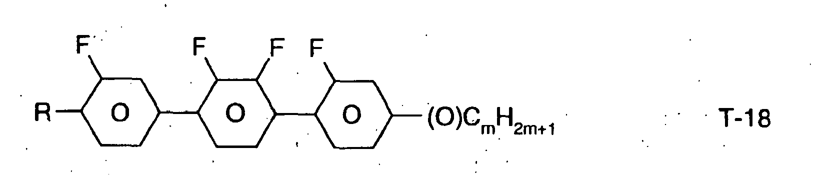 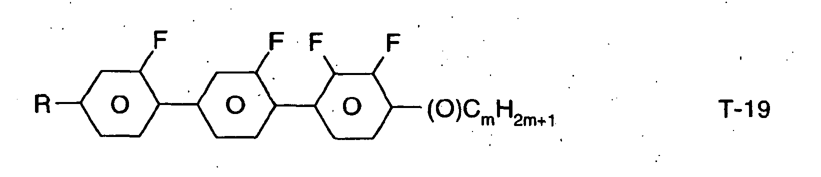 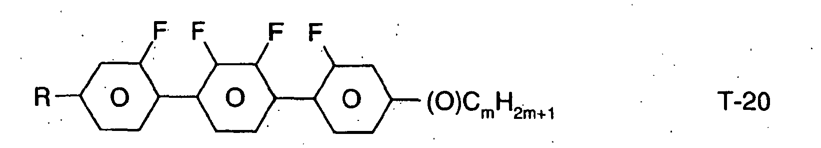 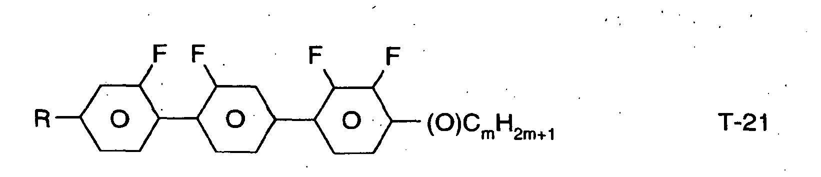 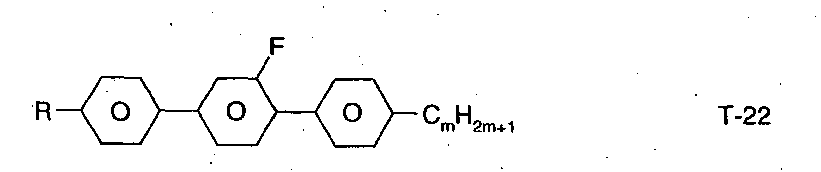 worin R Alkyl, Alkenyl, Alkoxy, Alkylalkoxy, Alkenyloxy mit 1 bzw. 2 bis 6 C-Atomen bedeutet,
enthält.
Vorzugsweise bedeutet R Methyl, Ethyl, Propyl, Butyl, Pentyl, Hexyl, Methoxy, Ethoxy, Propoxy, Butoxy, Pentoxy.
Das erfindungsgemäße Medium enthält die Terphenyle der Formeln T-1 bis T-22 vorzugsweise in Mengen von 2-30 Gew.%, insbesondere 5-20 Gew.%.
Besonders bevorzugt sind die Verbindungen der Formeln T-1, T-2, T-3, T-4 und T-22. In diesen Verbindungen bedeutet R vorzugsweise Alkyl, ferner Alkoxy jeweils mit 1-5 C-Atomen.
Vorzugsweise werden die Terphenyle in den erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-22.
p) Flüssigkristallines Medium enthaltend zusätzlich ein oder mehrere Biphenyle der Formeln B-1 bis B-3, 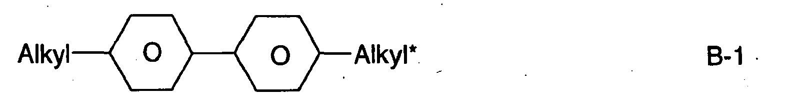 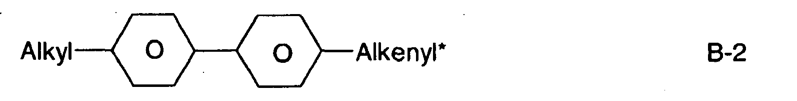 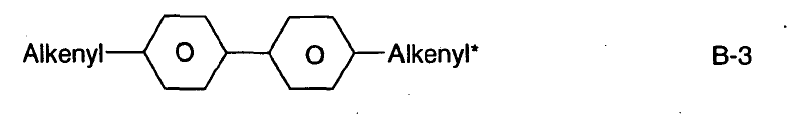 worin
- Alkyl und Alkyl*: jeweils unabhängig voneinander einen gerad- kettigen Alkylrest mit 1-6 C-Atomen, und
- Alkenyl und Alkenyl*: jeweils unabhängig voneinander einen geradkettigen Alkenylrest mit 2-6 C-Atomen
bedeuten.
Der Anteil der Biphenyle der Formeln B-1 bis B-3 in der Gesamtmischung beträgt vorzugsweise mindestens 3 Gew.%, insbesondere ≥ 5 Gew.%.
Von den Verbindungen der Formeln B-1 bis B-3 sind die Verbindungen der Formel B-2 insbesondere bevorzugt.
Besonders bevorzugte Biphenyle sind 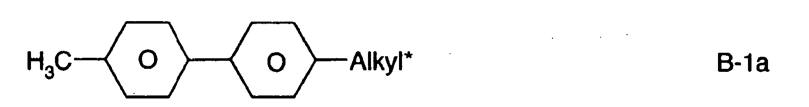 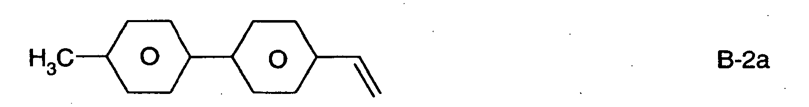 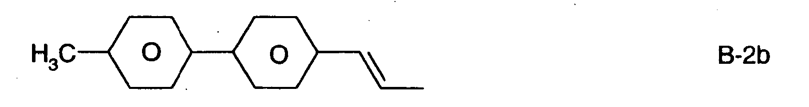 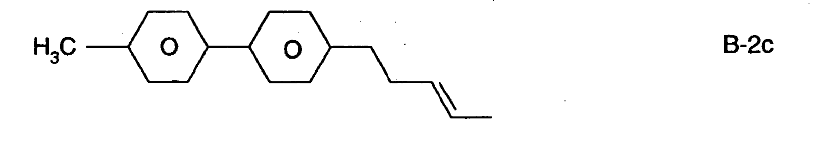 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
q) Flüssigkristallines Medium enthaltend mindestens eine Verbindung der Formeln Z-1 bis Z-16, 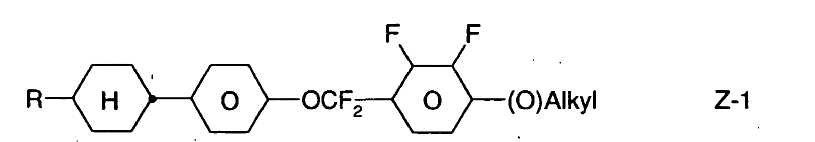 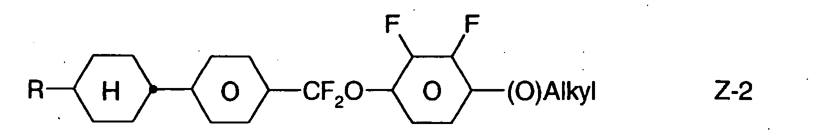 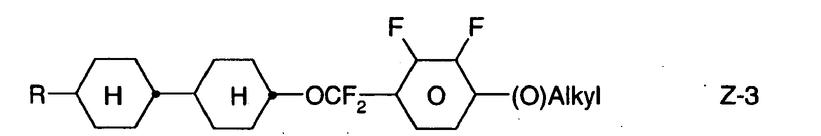 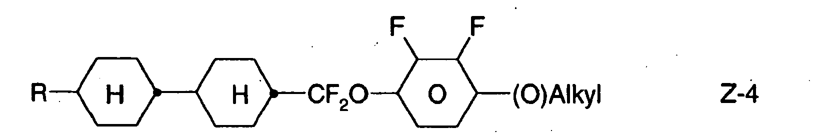 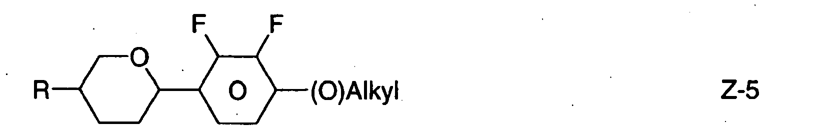 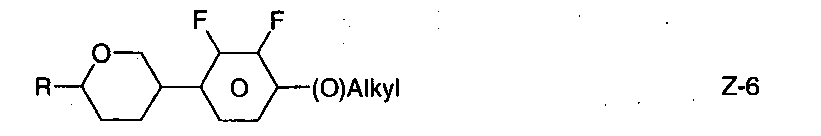 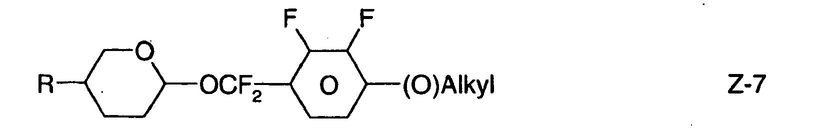 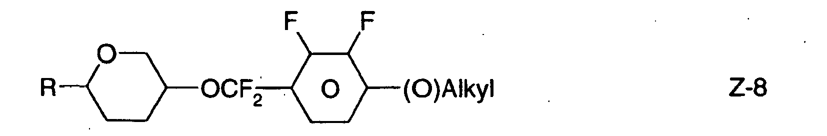 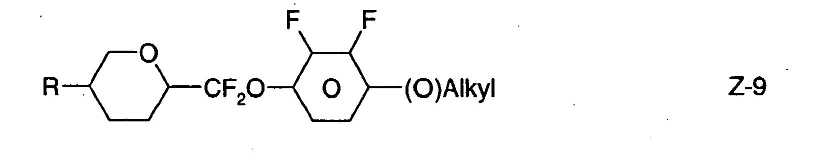 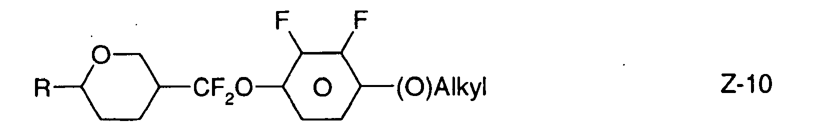 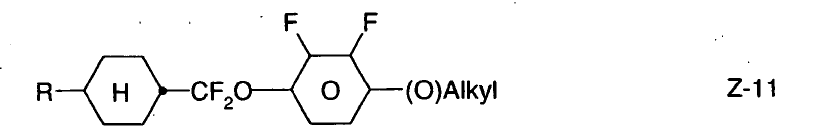 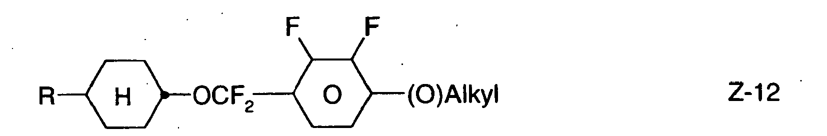 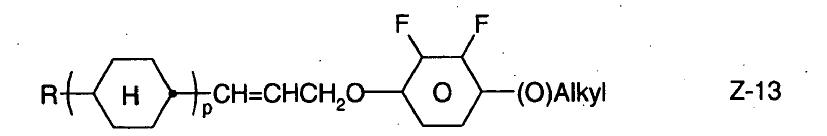 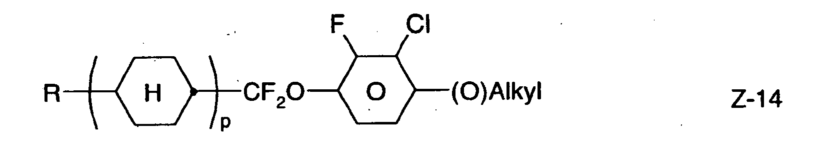 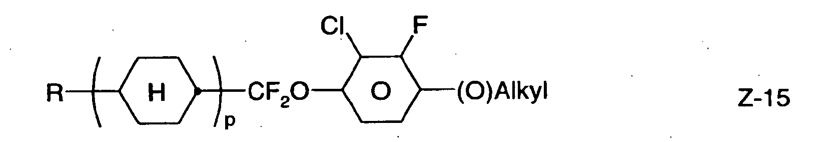 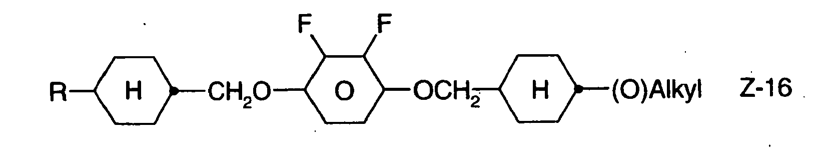 worin
Alkyl die oben angegebenen Bedeutungen hat und R ein geradkettiger Alkyl-, Alkoxy- oder Alkenylrest mit 1 bzw. 2 bis 7 C-Atomen
bedeutet.
r) Flüssigkristallines Medium enthaltend mindestens eine Verbindung der Formeln O-1 bis O-12, 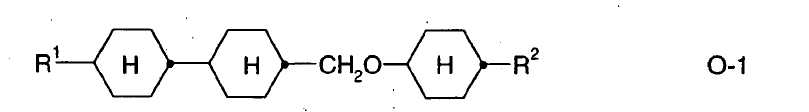 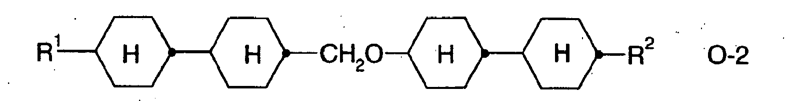 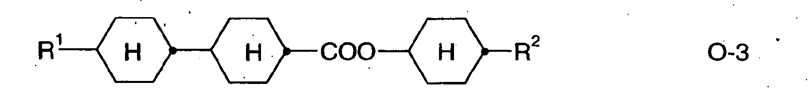 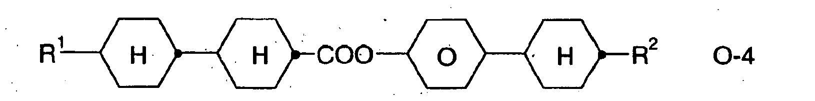 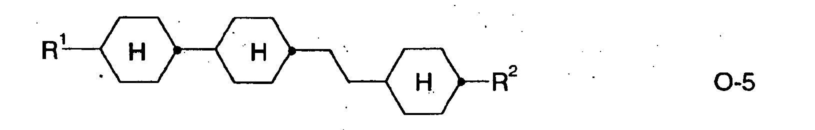 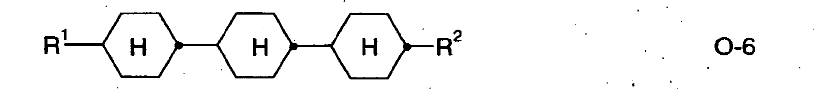 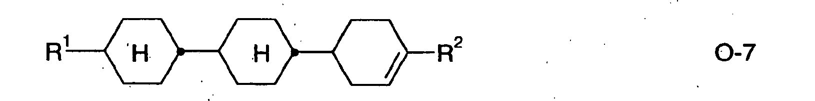 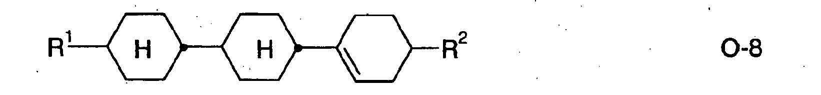 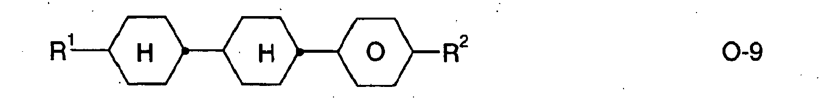 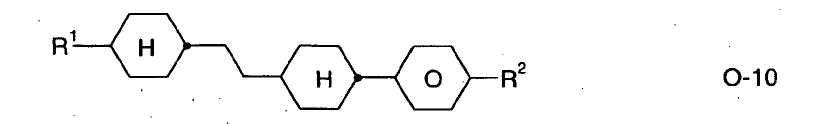 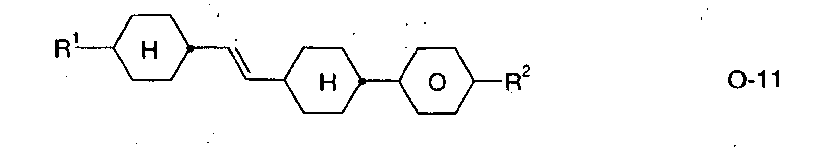 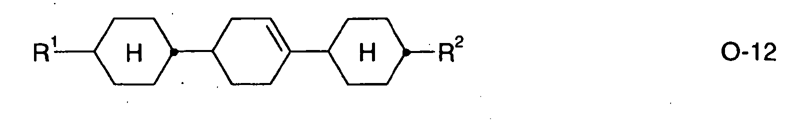 worin R¹ und R² die für R¹¹ angegebenen Bedeutungen haben, vorzugsweise bedeuten R¹ und R² jeweils unabhängig voneinander geradkettiges Alkyl, ferner Alkenyl.
Bevorzugte Medien enthalten eine oder mehrere Verbindungen der Formel O-1, O-3, O-4 und/oder O-9.
Der Anteil der Verbindungen 0-1 bis 0-12 in der Mischung beträgt vorzugsweise 5-40 Gew.%.
s) Bevorzugte erfindungsgemäße flüssigkristalline Medien enthalten eine oder mehrere Substanzen, die eine Tetrahydronaphthyl- oder Naphthyl-Einheit aufweisen, wie z. B. die Verbindungen der Formeln N-1 bis N-6, 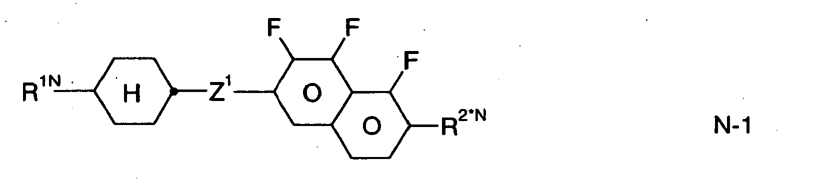 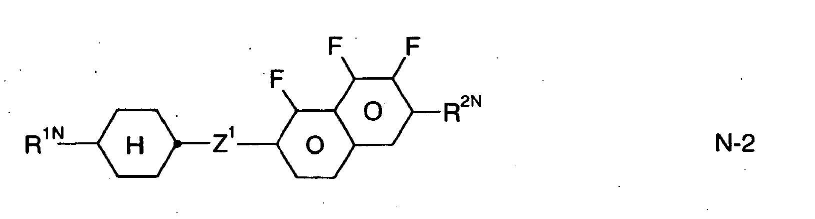 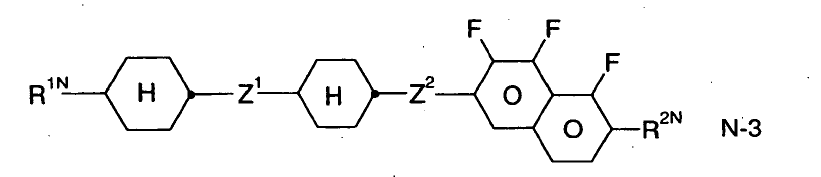 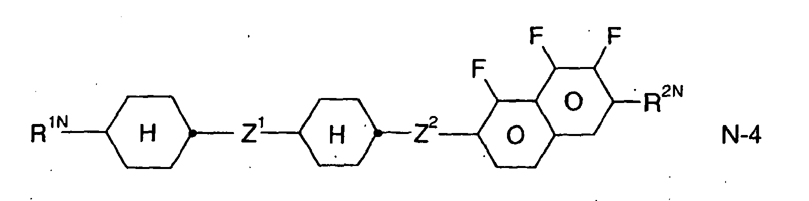 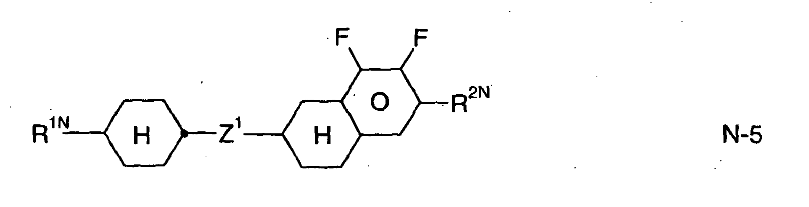 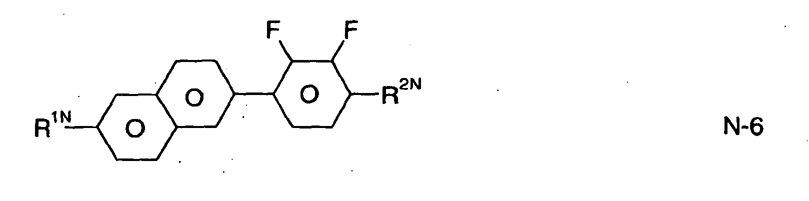 worin R^{1N} und R^{2N} jeweils unabhängig voneinander die für R¹¹ angegebenen Bedeutungen haben, vorzugsweise geradkettiges Alkyl, geradkettiges Alkoxy oder geradkettiges Alkenyl bedeuten, und Z, Z¹ und Z² jeweils unabhängig voneinander
-C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung
bedeuten.
t) Bevorzugte Mischungen enthalten eine oder mehrere Difluordibenzochroman-Verbindungen der Formel BC und/oder Chromane der Formeln CR, 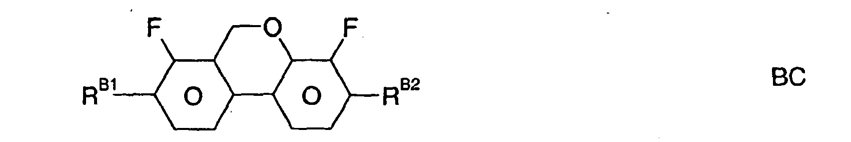 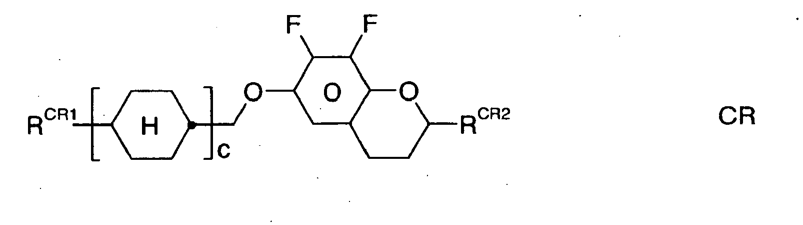 worin
R^{B1}, R^{B2}, R^{CR1} und R^{CR2}, jeweils unabhängig voneinander die Bedeutung von R¹¹ aufweisen, vorzugsweise in Mengen von 3 bis 20 Gew.%, insbesondere in Mengen von 3 bis 15 Gew.%.
Besonders bevorzugte Verbindungen der Formeln BC und CR sind die Verbindungen BC-1 bis BC-7 und CR-1 bis CR-5, 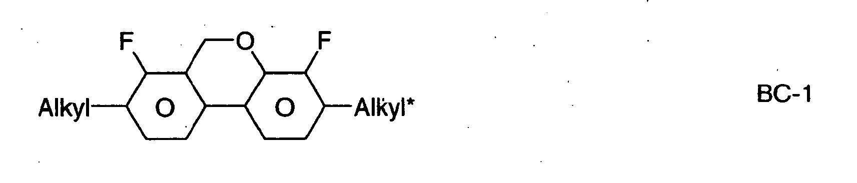 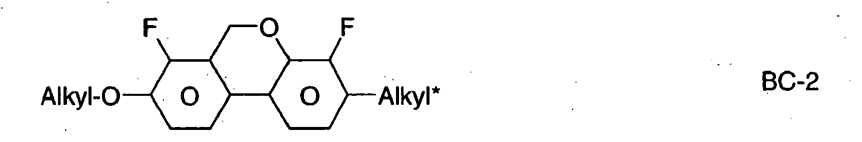 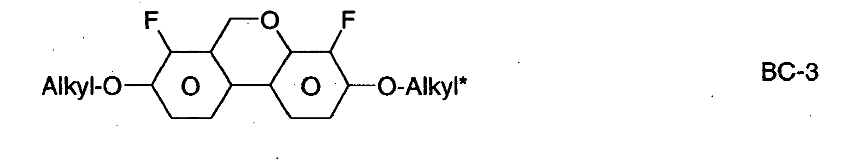 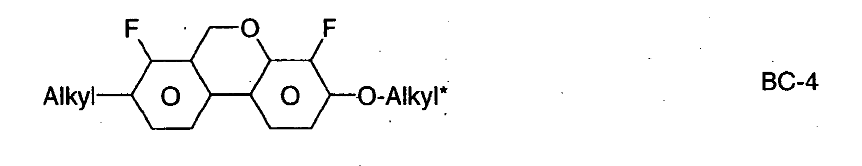 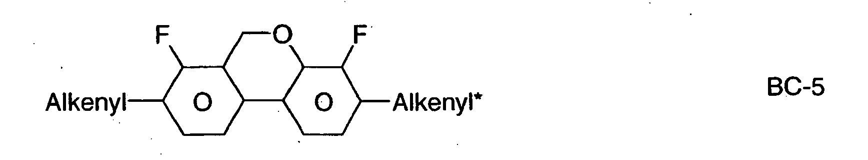 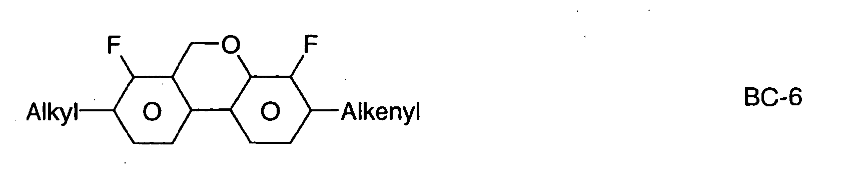 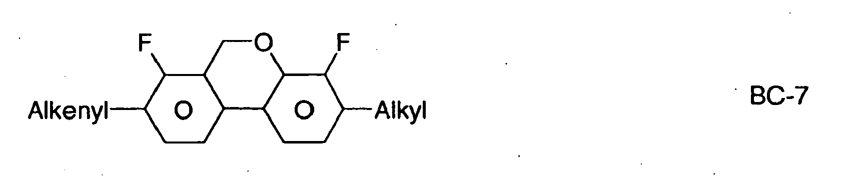 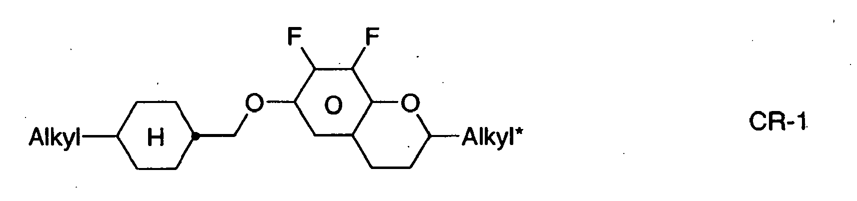 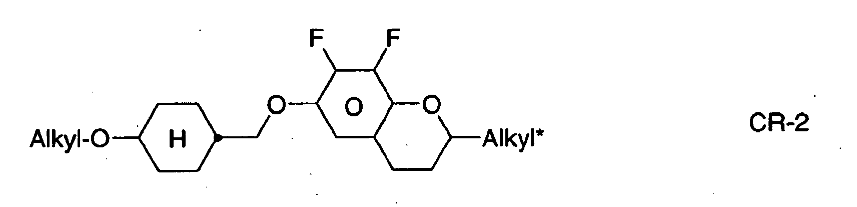 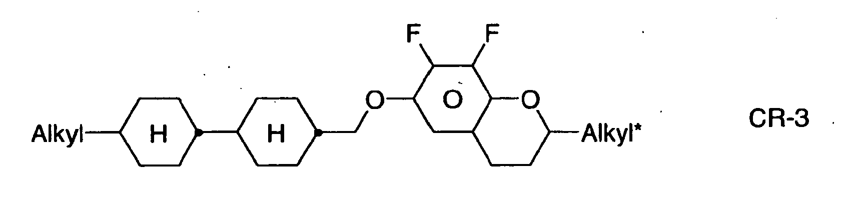 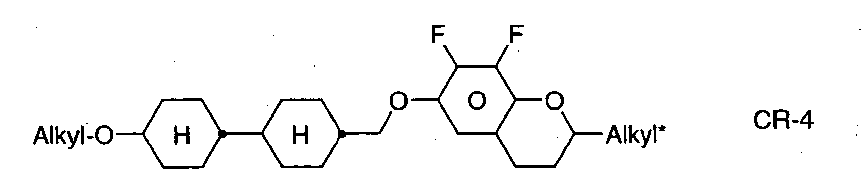 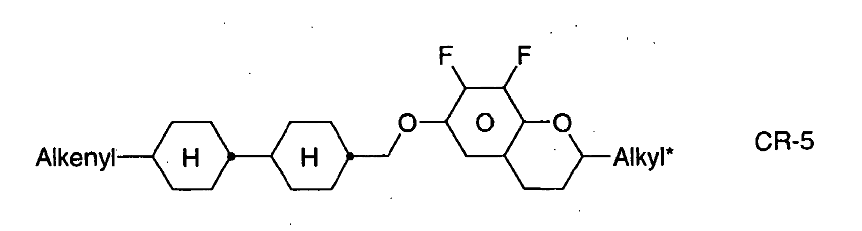 worin
- Alkyl und Alkyl*: jeweils unabhängig voneinander einen geradkettigen Alkylrest mit 1-6 C-Atomen, und
- Alkenyl und Alkenyl*: jeweils unabhängig voneinander einen geradkettigen Alkenylrest mit 2-6 C-Atomen,
bedeuten.
Ganz besonders bevorzugt sind Mischungen enthaltend eine, zwei oder drei Verbindungen der Formel BC-2.
u) Flüssigkristallines Medium, welches zusätzlich eine oder mehrere Verbindungen der Formeln 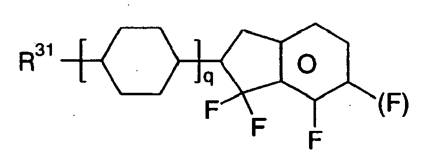 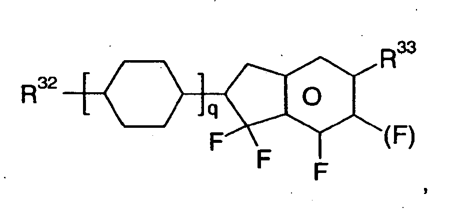 enthält,
vorzugsweise in Mengen von > 3 Gew.%, insbesondere ≥ 5 Gew.%, und ganz besonders bevorzugt von 5-30 Gew.% enthält,
wobei
R³¹⁻³² die für R¹¹ angegebenen Bedeutungen haben und R³³ CH₃, C₂H₅ oder n-C₃H₇ und q 1 oder 2
bedeutet.

Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium nach einem der Ansprüche 1 bis 10 enthält.

Vorzugsweise weist die erfindungsgemäße Flüssigkristallmischung einen nematischen Phasenbereich von mindestens 60 K und eine Fließviskosität ν₂₀ von maximal 30 mm² · s⁻¹ bei 20 °C auf.

Die erfindungsgemäße Flüssigkristallmischung weist ein Δε von etwa -0,5 bis -7,0, insbesondere von etwa -2,0 bis -4,0 auf, wobei Δε die dielektrische Anisotropie bedeutet. Die Rotationsviskosität γ₁ ist vorzugsweise < 150 mPa·s, insbesondere < 130 mPa·s.

Die Doppelbrechung Δn in der Flüssigkristallmischung ist in der Regel ≤ 0,13, vorzugsweise zwischen 0,06 und 0,12, und insbesondere zwischen 0,07 und 0,11.

Die erfindungsgemäßen Mischungen sind für alle VA-TFT-Anwendungen geeignet, wie z. B. VAN, MVA, (S)-PVA, ASV. Weiterhin sind sie für IPS (In plane switching)-, FFS (Fringe field switching)-Anwendungen mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von < -0,5. Sie enthält bevorzugt Verbindungen der Formeln I, IIA und/oder IIB.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm² s⁻¹, vorzugsweise nicht mehr als 25 mm² s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm² s⁻¹, bei 20 °C. Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, Verbindungen der Formeln I, IIA und/oder IIB und optional III.

Neben Verbindungen der Formeln I, IIA und/oder IIB und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH-CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(cH₂)₃O- |

oder eine C-C-Einfachbindung, Q Halogen, vorzugsweise Chlor, oder -CN, und R⁹ und R¹⁰ jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, SF₅, CF₃, OCF₃, F, CI oder Br bedeuten.

Bei den meisten dieser Verbindungen sind R⁹ und R¹⁰ voneinander verschieden, wobei einer dieser Reste meist eine unsubstituierte, geradkettige Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die erfindungsgemäßen flüssigkristallinen Mischungen werden hergestellt, indem man eine oder mehrere Verbindungen der Formel I mit einer oder mehreren weiteren mesogenen Verbindungen mischt.

Es versteht sich für den Fachmann von selbst, dass die erfindungsgemäße VA-, IPS-, FFS- oder PALC-Mischung auch Verbindungen enthalten kann, worin beispielsweise H, N, O, CI, F durch die entsprechenden Isotope ersetzt sind.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,1-5 Gew.%, besonders bevorzugt 0,2-2 %, bezogen auf die Mischung zugesetzt werden. Derartige Mischungen können für sogenannte Polymer Stabilized VA-Modes, bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Komponenten, wie z. B. Verbindungen mit Alkenyl-Seitenketten, enthält.

Der Aufbau der erfindungsgemäßen Flüssigkristallanzeigen entspricht der üblichen Geometrie, wie sie z.B. in EP-OS 0 240 379, beschrieben wird. Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m = 1-6; z = 1-6)

| | |
|---|---|
| CY-n-Om | 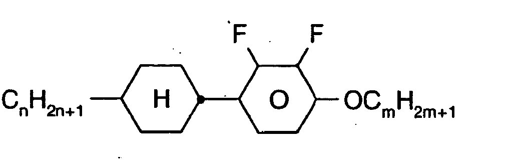 |
| CP(F,Cl)-n-Om | 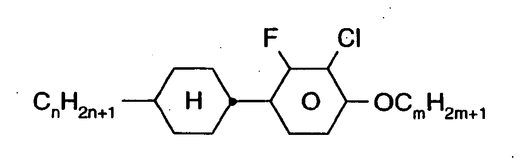 |
| CP(Cl,F)-n-Om | 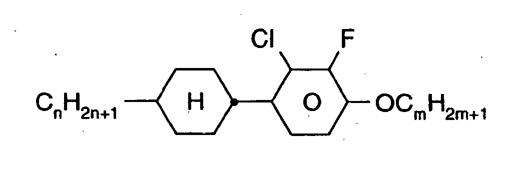 |
| CY-V-Om | 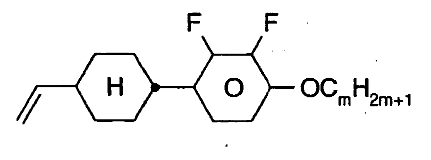 |
| CY-V2-Om | 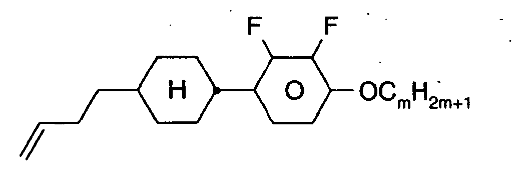 |
| CY-1V2-Om | 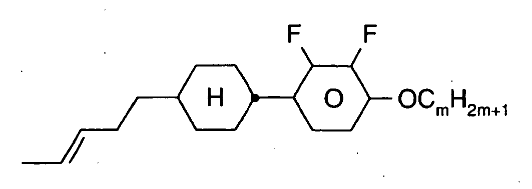 |
| CY-3V-Om | 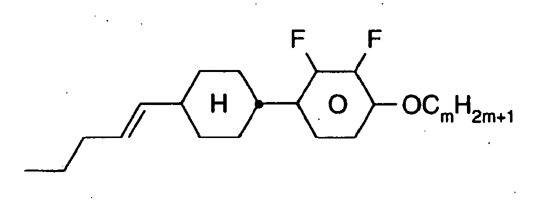 |
| CCY-n-Om | 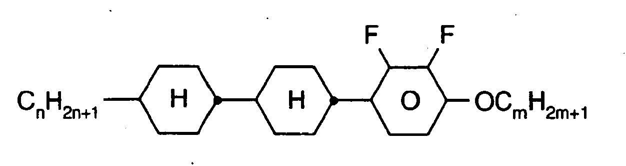 |
| CCY-n-m | 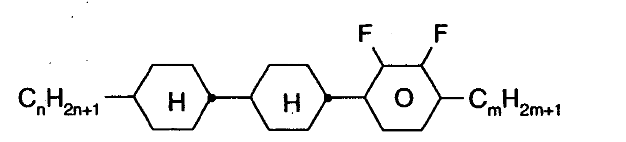 |
| CCP(F,Cl)-n-Om | 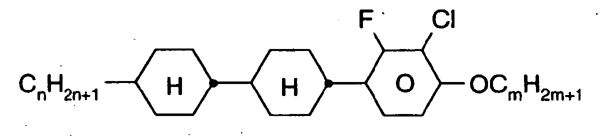 |
| CCP(Cl,F)-n-Om | 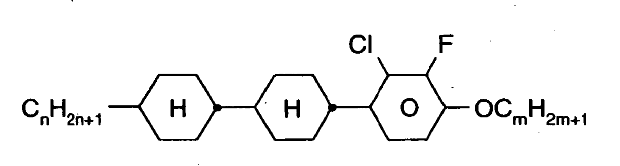 |
| CCY-V2-m | 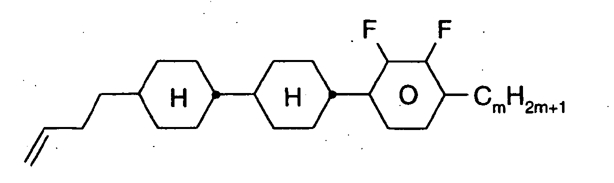 |
| CCY-1V2-m | 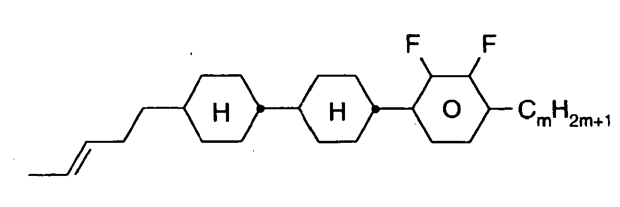 |
| CCY-V-m | 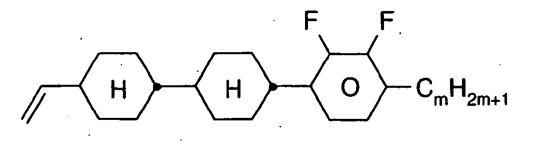 |
| CCY-3V-m | 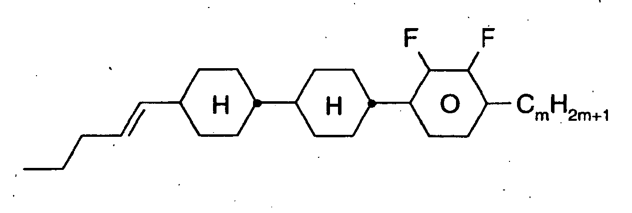 |
| CLY-n-m | 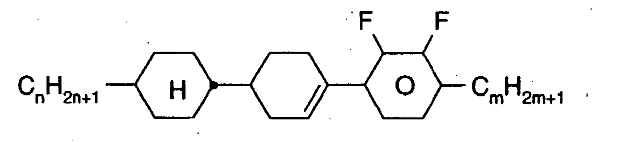 |
| CLY-n-Om | 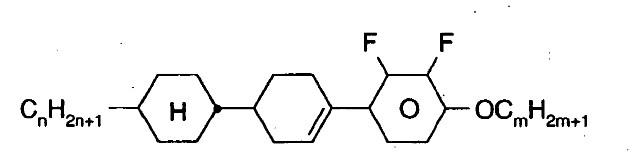 |
| LY-n-m | 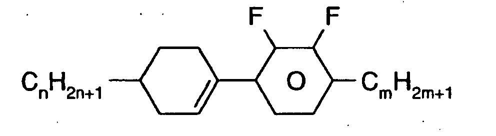 |
| LY-n-Om | 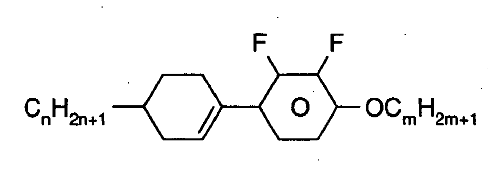 |
| D-nOmFF | 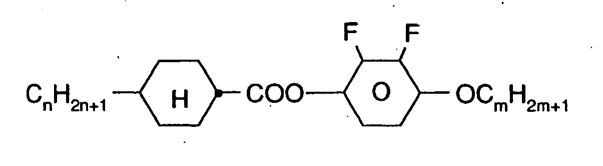 |
| CBC-nmF | 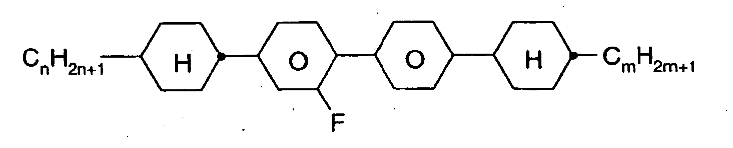 |
| CBC-nm | 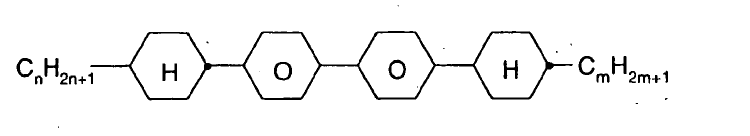 |
| CCP-V-m | 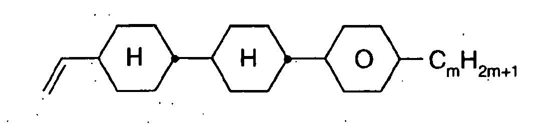 |
| CCP-Vn-m | 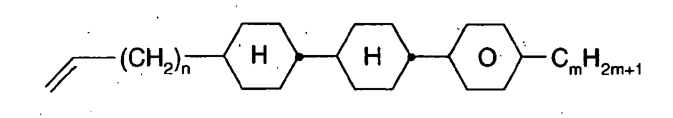 |
| CPYC-n-m | 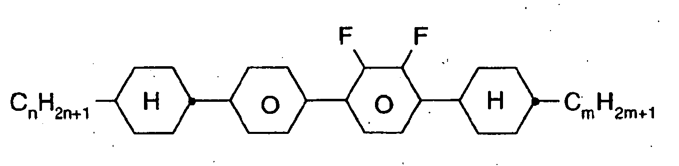 |
| CYYC-n-m | 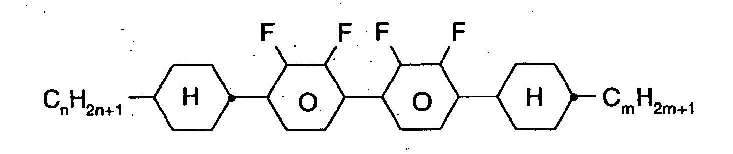 |
| CPGIY-n-m | 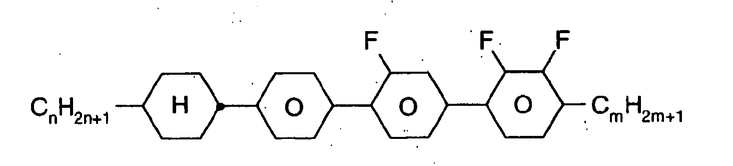 |
| PYGP-n-m | 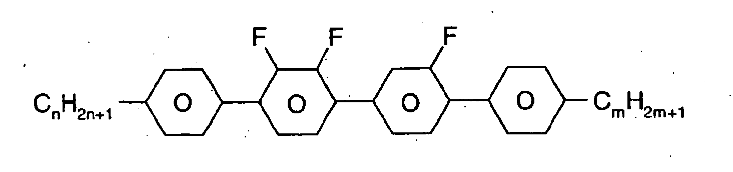 |
| CPYP-n-m | 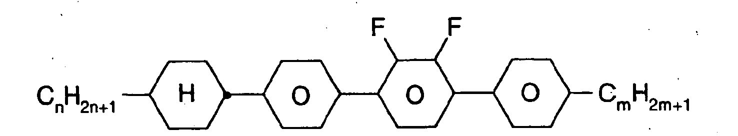 |
| CPYP-n-mV | 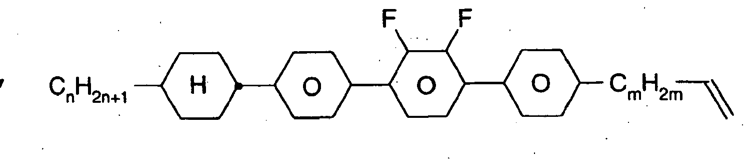 |
| CPYG-n-Om | 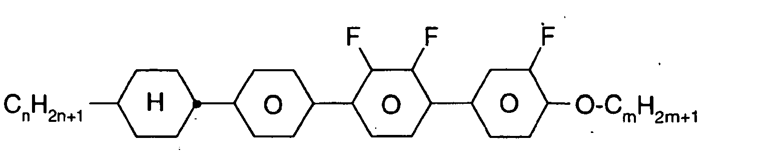 |
| CCYY-n-(O)m | 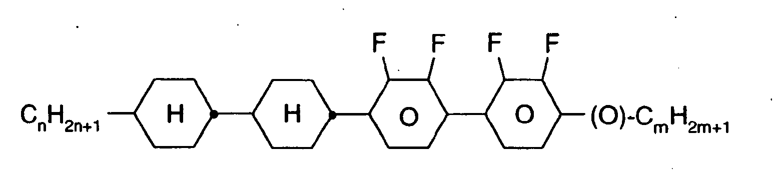 |
| CCH-nOm | 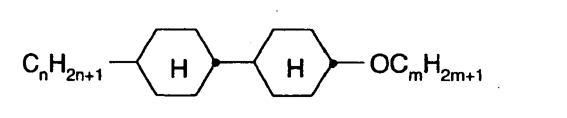 |
| CY-n-m | 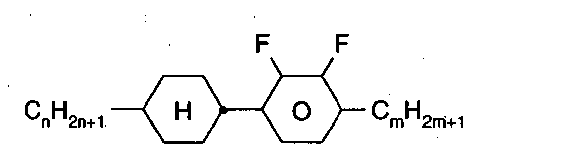 |
| CCH-nm | 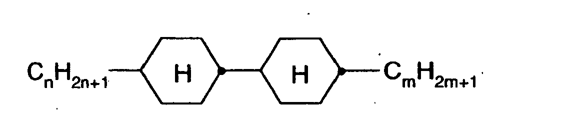 |
| CC-n-V | 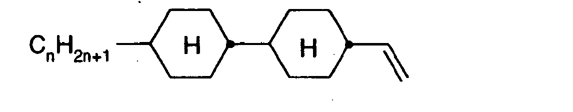 |
| CC-n-V1 | 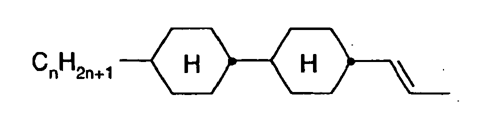 |
| CCC-V-V | 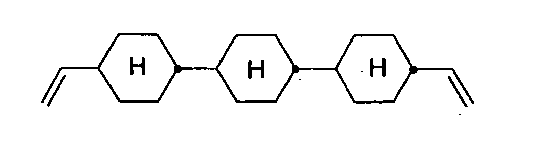 |
| CCC-n-V | 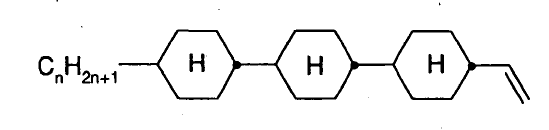 |
| CCC-n-mV | 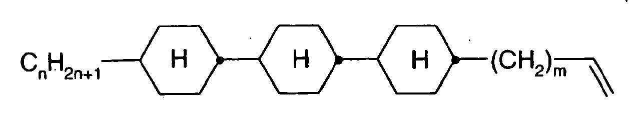 |
| CCVC-V-V | 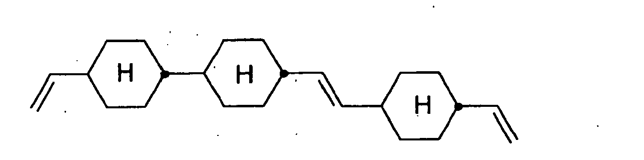 |
| CP-nOmFF | 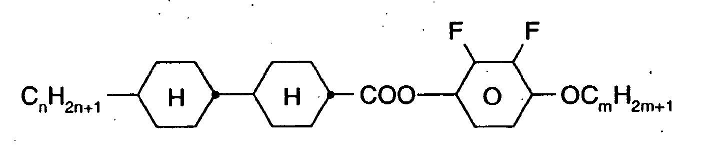 |
| CH-nm | 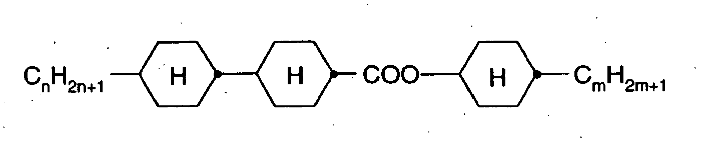 |
| CEY-V-n | 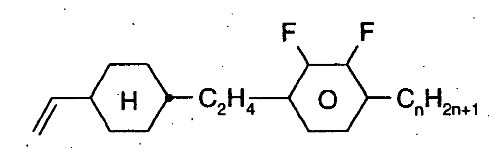 |
| CVY-V-n | 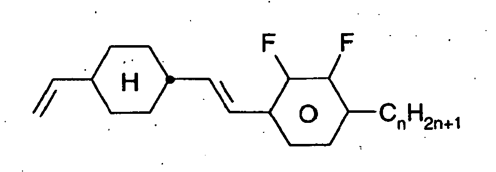 |
| CLY-n-Om | 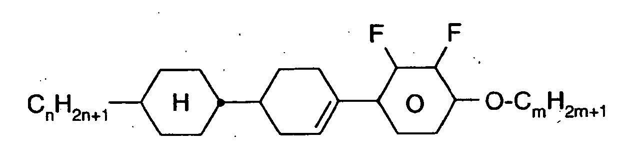 |
| CY-n-O1V | 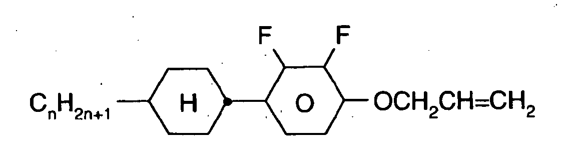 |
| CY-n-OC(CH₃)=CH₂ | 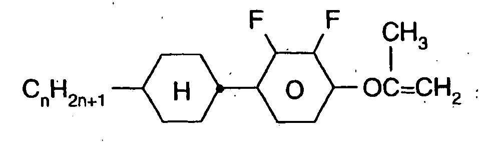 |
| BCN-nm | 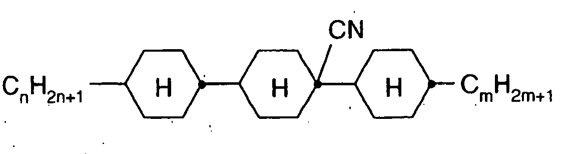 |
| CCN-nm | 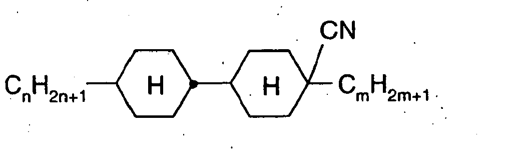 |
| CY-n-OV | 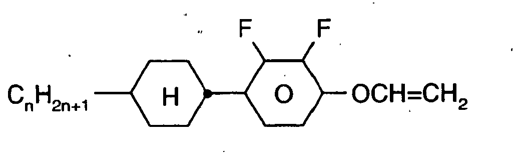 |
| PCH-nm | 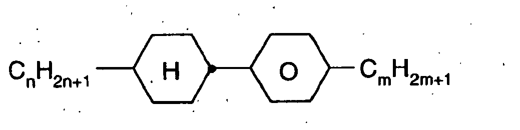 |
| PCH-nOm | 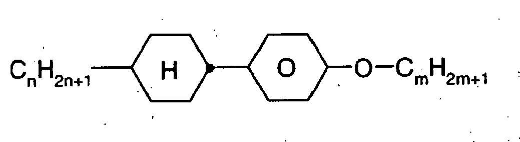 |
| PGIGI-n-F | 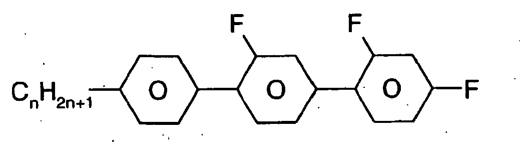 |
| BCH-nm | 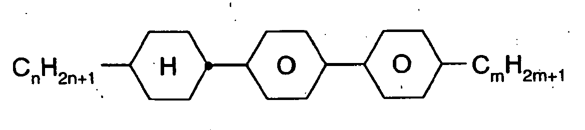 |
| CCPC-nm | 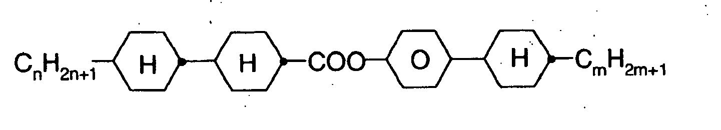 |
| CCY-n-zOm | 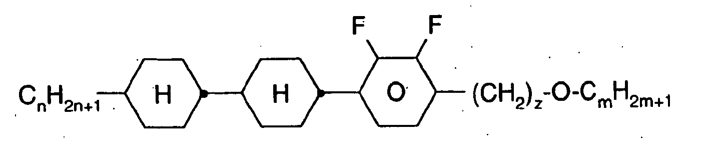 |
| CPY-n-(O)m | 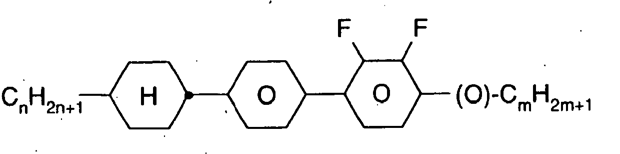 |
| CPY-V-Om | 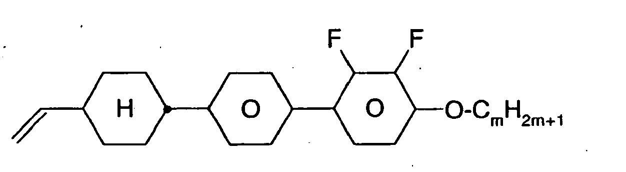 |
| CQY-n-(O)m | 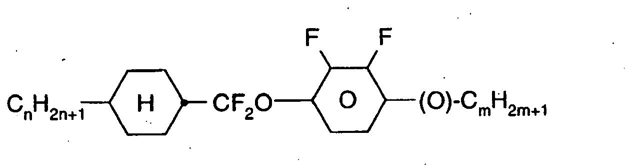 |
| CQIY-n-(O)m | 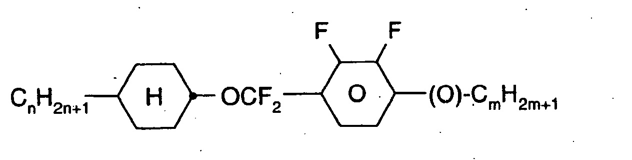 |
| CCQY-n-(O)m | 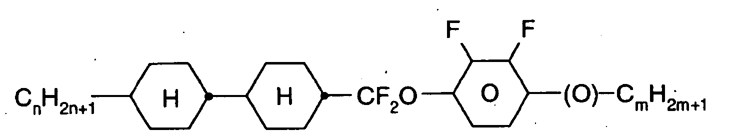 |
| CCQIY-n-(O)m | 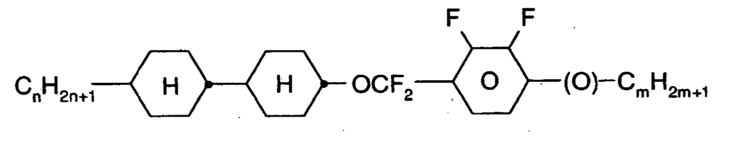 |
| PYP-n-(O)m | 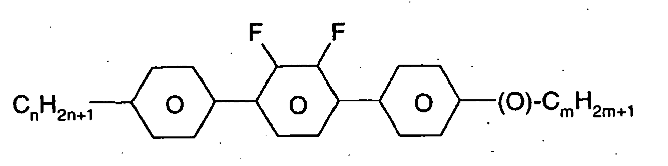 |
| CPQY-n-(O)m | 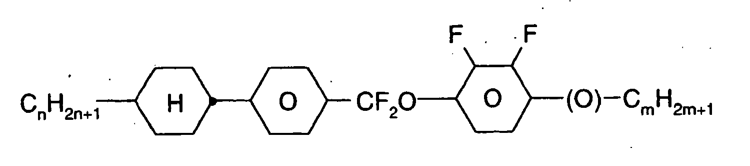 |
| PGP-n-m | 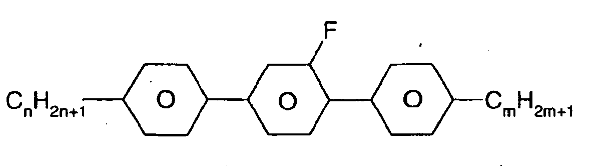 |
| CPGP-n-m | 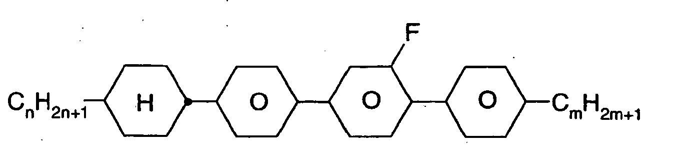 |
| CPQIY-n-(O)m | 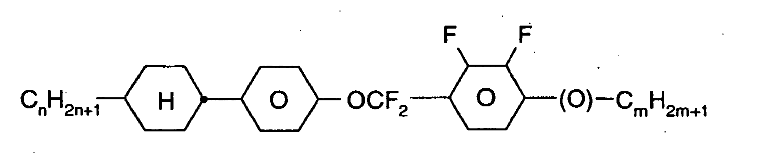 |
| CCY-V-(O)m | 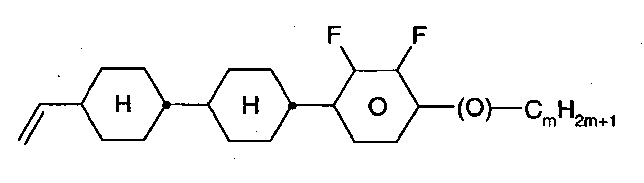 |
| PY-n-(O)m | 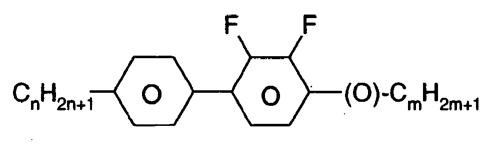 |
| CCOC-n-m | 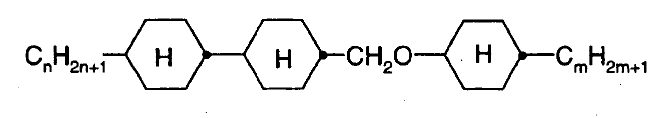 |
| CK-n-F | 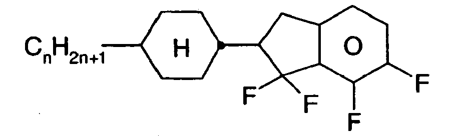 |

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA-LCD-Anzeige einsetzbar sind.

Die Dielektrika können auch weitere, dem Fachmann bekannte und in der Literatur beschriebene Zusätze, wie z. B. UV-Absorber, Antioxidantien, Nanopartikel, Radikalfänger, enthalten. Beispielsweise können 0-15 % pleochroitische Farbstoffe, Stabilisatoren oder chirale Dotierstoffe zugesetzt werden.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethem (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle A werden mögliche Dotierstoffe angegeben, die den erfindungsgemäßen Mischungen zugesetzt werden können. Sofern die Mischungen einen oder mehrere Dotierstoffe enthalten, wird er in Mengen von 0,01-4 Gew.%, vorzugsweise 0,1-1,0 Gew.%, eingesetzt.

**Tabelle A**

| | |
|---|---|
| 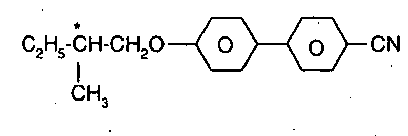 | 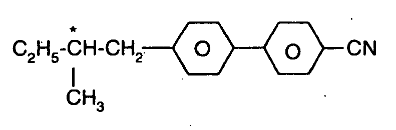 |
| **C 15** | **CB 15** |
| 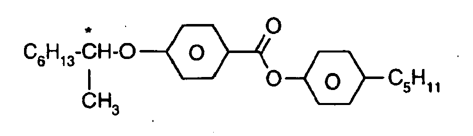 | |
| **CM 21** | |
| 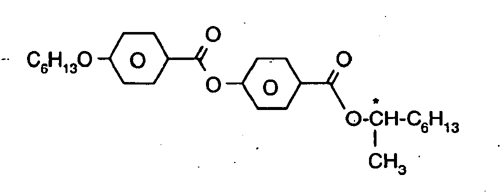 | |
| **R/S-811** | |
| 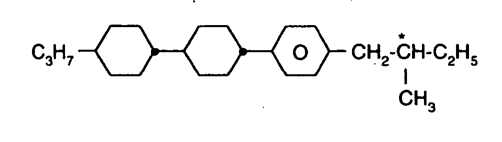 | |
| **CM 44** | |
| 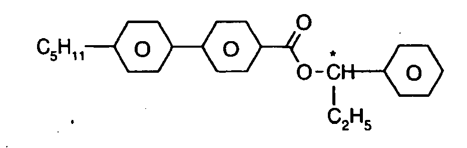 | 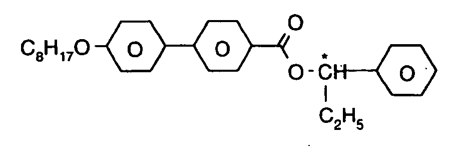 |
| **CM 45** | **CM 47** |
| 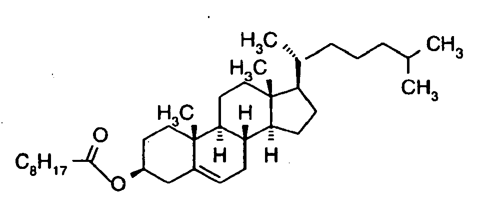 | |
| **CN** | |
| 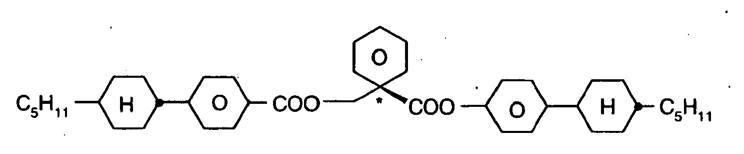 | |
| **R/S-1011** | |
| 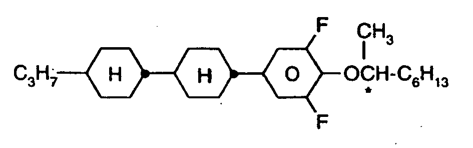 | |
| **R/S-2011** | |
| 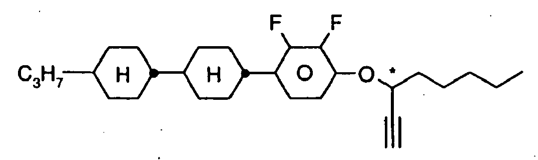 | |
| **R/S-3011** | |
| 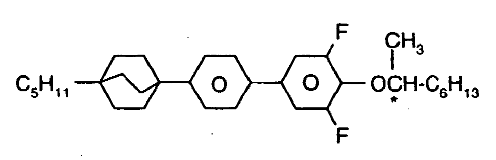 | |
| **R/S-4011** | |
| 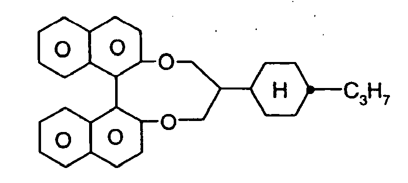 | |
| **R/S-5011** | |

Stabilisatoren, die beispielsweise den erfindungsgemäßen Mischungen zugesetzt werden können, vorzugsweise in Mengen von 0,01 bis 6 Gew.%, insbesondere 0,1 bis 3 Gew.%, werden nachfolgend in Tabelle B genannt:

**Tabelle B**

| | |
|---|---|
| (n = 1-12) | |
| 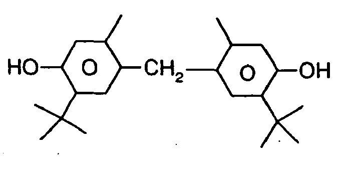 | 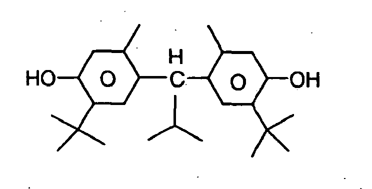 |
| 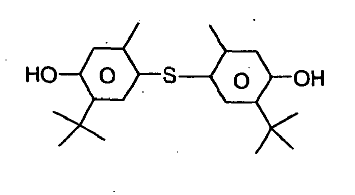 | 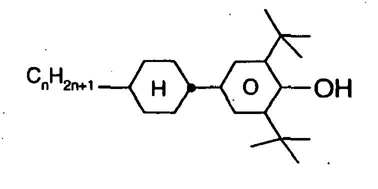 |
| 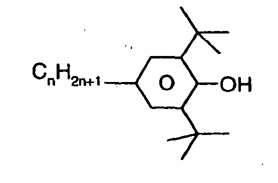 | 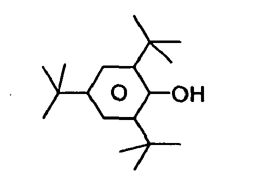 |
| 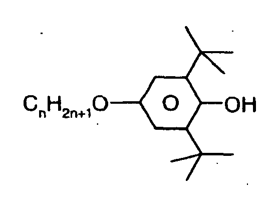 | 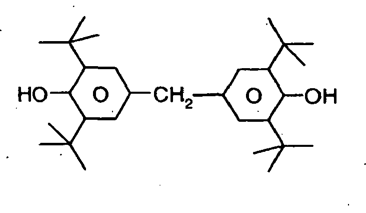 |
| 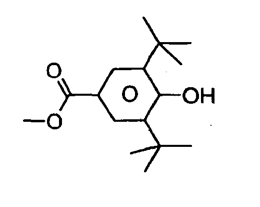 | 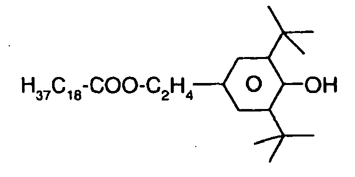 |
| 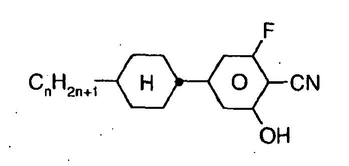 | |
| 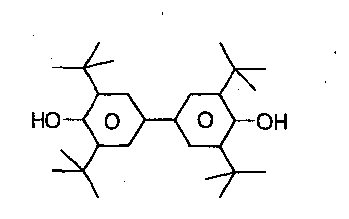 | 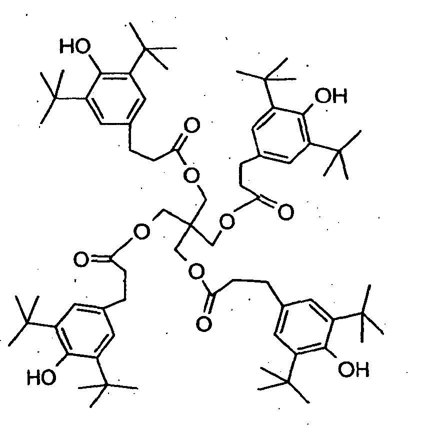 |
| 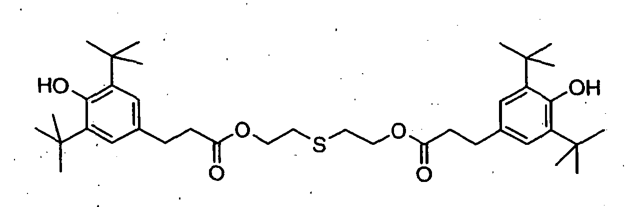 | |
| 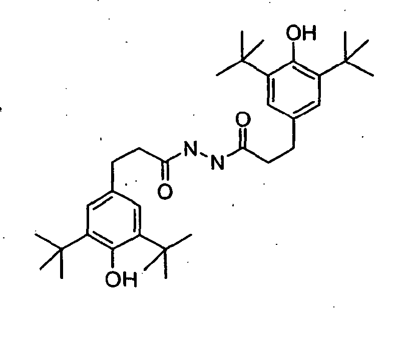 | 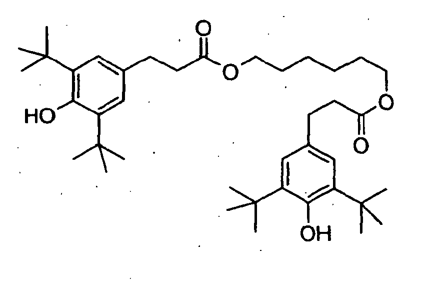 |
| 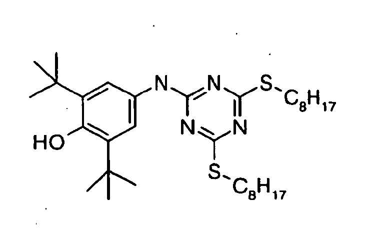 | 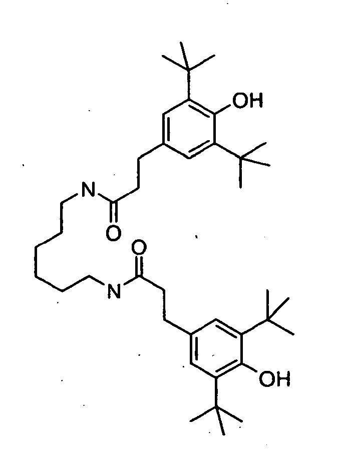 |
| 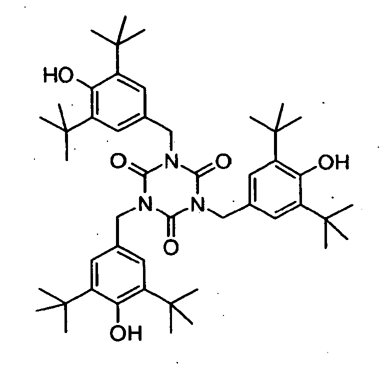 | 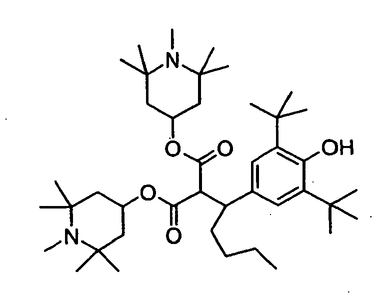 |
| 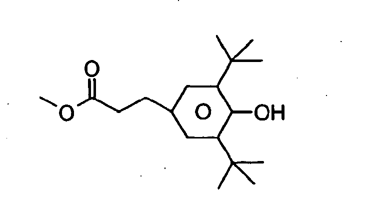 | 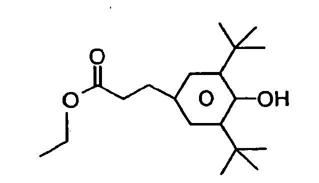 |
| 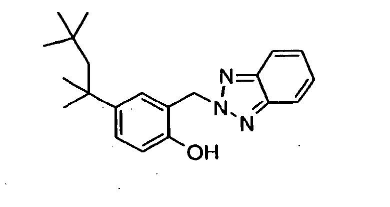 | 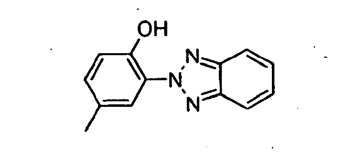 |
| 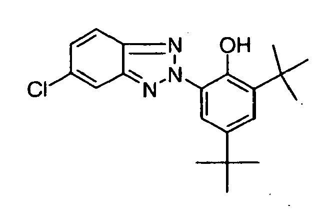 | 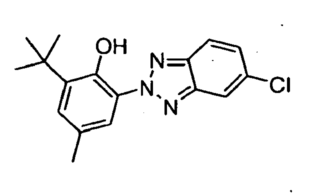 |
| 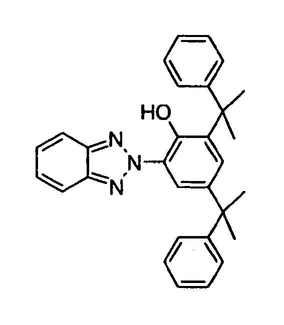 | 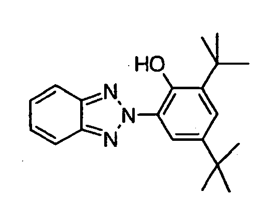 |
| 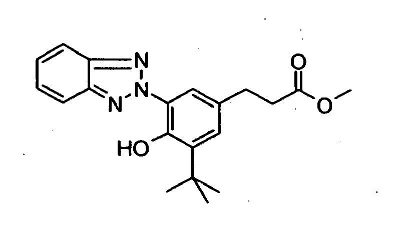 | 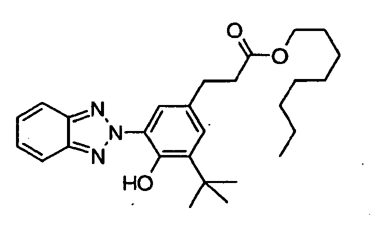 |
| 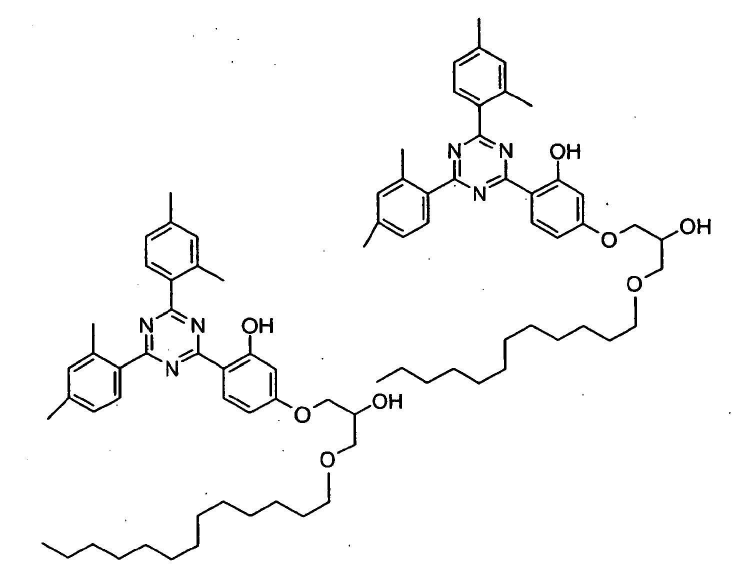 | |
| 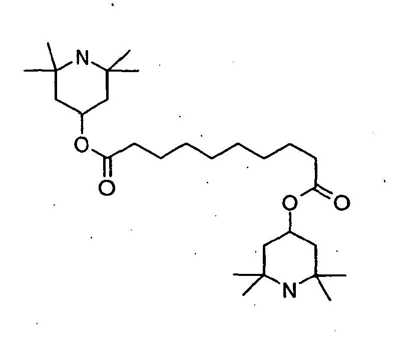 | 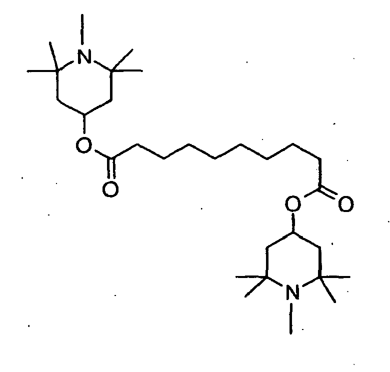 |

Die folgenden Beispiele sollen die Erfindung erläutern, ohne sie zu begrenzen. Vor- und nachstehend bedeuten

| | |
|---|---|
| Vₒ | Schwellenspannung, kapazitiv [V] bei 20 °C |
| Δn | die optische Anisotropie gemessen bei 20 °C und 589 nm |
| Δε | die dielektrische Anisotropie bei 20 °C und 1 kHz |
| cp. | Klärpunkt [°C] |
| γ₁ | Rotationsviskosität gemessen bei 20 °C [mPa·s] |
| LTS | Low temperature stability (nematische Phase), bestimmt in Testzellen |

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homeotrope Orientierung der Flüssigkristalle bewirken.

Alle physikalischen Eigenschaften werden nach "Merck Liquid Crystals, Physical Properties of Liquid Crystals", Status Nov. 1997, Merck KGaA, Deutschland bestimmt und gelten bei einer Temperatur von 20 °C, sofern nicht explizit anders angegeben.

Alle Prozent-Angaben in dieser Anmeldung sind, sofern nicht anders angegeben, Gewichtsprozent. Alle Konzentrationen in dieser Anmeldung, soweit nicht explizit anders angegeben, beziehen sich auf die entsprechende Mischung oder Mischungskomponente.

### Mischungsbeispiele

### Beispiel 1

| | | | |
|---|---|---|---|
| 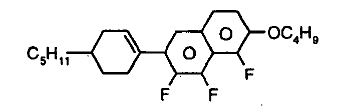 | 20,00 % | Klärpunkt [°C]: | 84,0 |
| 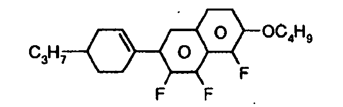 | 12,00 % | Δn [589 nm, 20 °C]: | +0,0965 |
| CCY-3-O3 | 10,00 % | Δε [1 kHz, 20 °C]: | -3,0 |
| CC-5-V | 30,00 % | γ₁ [mPa·s, 20 °C]: | 128 |
| CC-3-V1 | 10,00 % | γ₁/Δn²[Pa·s]: | 13,75 |
| CCP-V-1 | 8,00 % | | |
| CCH-34 | 10,00 % | | |

### Beispiel 2

| | | | |
|---|---|---|---|
| 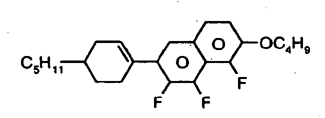 | 6,00 % | Klärpunkt [°C]: | 69,5 |
| 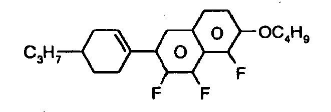 | 12,00 % | Δn [589 nm, 20 °C]: | +0,0834 |
| CY-5-O2 | 15,00 % | ε_{∥} [589 nm, 20 °C]: | 3,6 |
| CCY-4-O2 | 7,00 % | ε_{⊥} [589 nm, 20 °C]: | 6,7 |
| CCY-3-O3 | 10,00% | Δε [1 kHz, 20 °C]: | -3,1 |
| CCP-V-1 | 6,00 % | V₀ [V, 20 °C]: | 2,17 |
| CC-3-V | 35,00 % | γ₁ [mPa·s]: | 84 |
| CC-4-V | 9,00 % | γ₁/Δn² [Pa·s]: | 12,08 |

### Beispiel 3

| | | | |
|---|---|---|---|
| 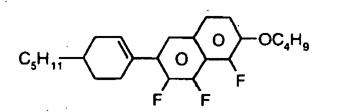 | 12,00 % | Klärpunkt [°C]: | 70,0 |
| 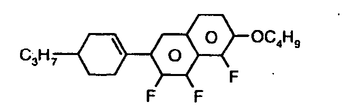 | 6,00 % | Δn [589 nm, 20 °C]: | +0,0823 |
| CK-3-F | 5,00 % | Δε [1 kHz, 20 °C]: | -3,6 |
| CK-4-F | 7,00 % | γ₁ [mPa·s, 20 °C]: | 83 |
| CK-5-F | 5,00 % | γ₁/Δn²[Pa·s]: | 12,25 |
| CCY-4-O2 | 5,00% | | |
| CCY-3-O3 | 7,00% | | |
| CPY-3-O2 | 3,00% | | |
| CCP-V-1 | 3,00% | | |
| CC-3-V | 35,00 % | | |
| CC-4-V | 12,00 % | | |

## Patentansprüche

1. Flüssigkristallines Medium auf der Basis eines Gemisches von polaren Verbindungen, **dadurch gekennzeichnet, dass** es mindestens eine Verbindung der Formel I, 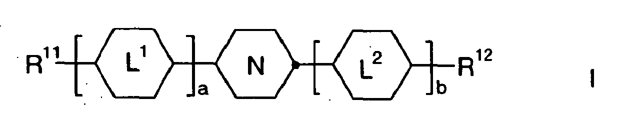 worin
R¹¹ und R¹² jeweils unabhängig voneinander einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 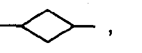 -C≡C-, -CF₂O-, -OC-O- oder -O-CO- so ersetzt sein können, dass O-Atome nicht direkt miteinander verknüpft sind, 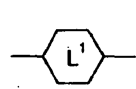 und 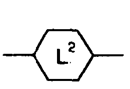 jeweils unsabhängig voneinnander 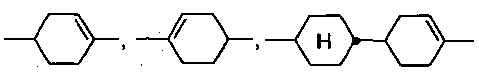 oder 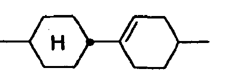 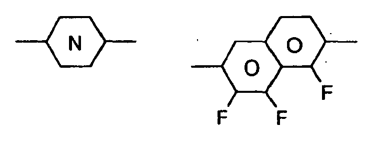 oder 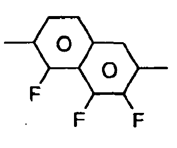
a und b jeweils unabhängig voneinander 0 oder 1, wobei a + b ≥ 1 ist,
bedeuten,
enthält.

2. Flüssigkristallines Medium nach Anspruch 1, **dadurch gekennzeichnet, dass** es zusätzlich eine oder mehrere Verbindungen der Formeln IIA und/oder IIB, 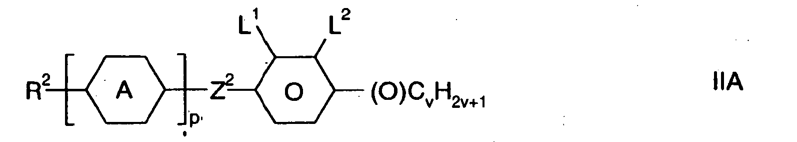 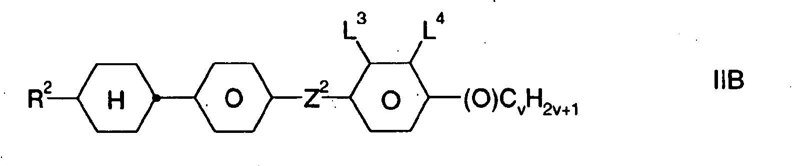 worin 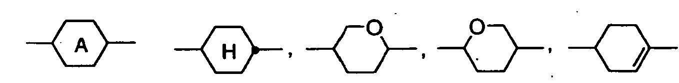 oder 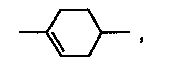
R² einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 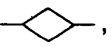 -C≡C-, -CF₂O- -OC-O- oder -O-CO- so ersetzt sein können, dass O-Atome nicht direkt miteinander verknüpft sind,
Z² Einfachbindung, -CH=CH-, -CH₂O- -OCH₂-, -CF₂O-, -OCF₂-, -O-, -CH₂- oder -CH₂CH₂-,
p 1 oder 2, und
L¹⁻⁴ jeweils unabhängig voneinander F, Cl, OCF₃, CF₃, CH₃, CH₂F, CHF₂, vorzugsweise L¹ = L² = F bzw. L³ = L⁴ = F,
v 1 bis 6
bedeuten,
enthält.

3. Flüssigkristallines Medium nach Anspruch 1 oder 2, **dadurch gekennzeichnet, dass** es zusätzlich eine oder mehrere Verbindungen der Formel III, 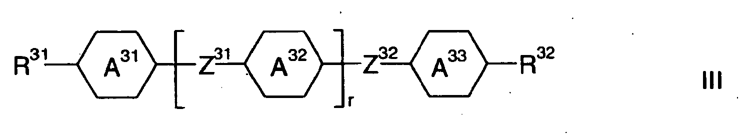 worin
R³¹ und R³² jeweils unabhängig voneinander einen unsubsti- tuierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 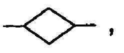 -C≡C-, -OC-O- oder -O-CO- so ersetzt sein können, dass O-Atome nicht direkt miteinander verknüpft sind, 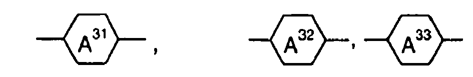 jeweils unabhängig voneinander, 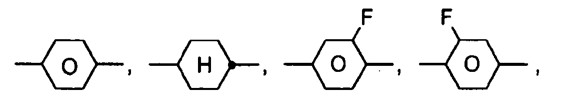 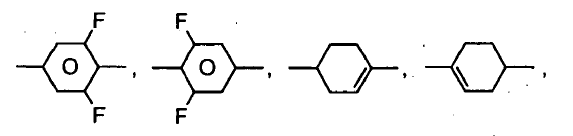 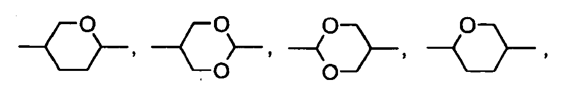 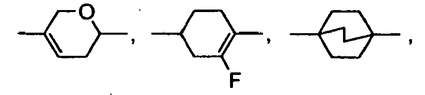
r 0, 1 oder 2,
Z³¹ und Z³² jeweils unabhängig voneinander eine Einfachbindung, -CH₂CH₂-, -C≡C-, -CH=CH-, -CF₂O-, -OCF₂-, -CF=CF-, -CF=CH-, -CH=CF-, -CH₂CF₂-, -CF₂CH₂-, -COO-, -OCO-, -CH₂O-, -OCH₂-; -(CH₂)₄-,
bedeuten,
enthält.

4. Flüssigkristallines Medium nach einem oder mehreren der Ansprüche 1 bis 3, **dadurch gekennzeichnet, dass** es ein, zwei, drei, vier oder mehr Verbindungen der Formel I enthält.

5. Flüssigkristallines Medium nach einem oder mehreren der Ansprüche 1 bis 4, **dadurch gekennzeichnet, dass** der Anteil an Verbindungen der Formel I im Gesamtgemisch mindestens 2 Gew.% beträgt.

6. Flüssigkristallines Medium nach einem oder mehreren der Ansprüche 1 bis 5, **dadurch gekennzeichnet, dass** der Anteil an Verbindungen der Formeln IIA und/oder IIB im Gesamtgemisch mindestens 20 Gew.% beträgt.

7. Flüssigkristallines Medium nach einem oder mehreren der Ansprüche 1 bis 6, **dadurch gekennzeichnet, dass** der Anteil an Verbindungen der Formel III im Gesamtgemisch mindestens 5 Gew.% beträgt.

8. Flüssigkristallines Medium nach einem oder mehreren der Ansprüche 1 bis 7, **dadurch gekennzeichnet, dass** es mindestens eine Verbindung ausgewählt aus der Gruppe der Verbindungen der Formeln I1 bis I16, 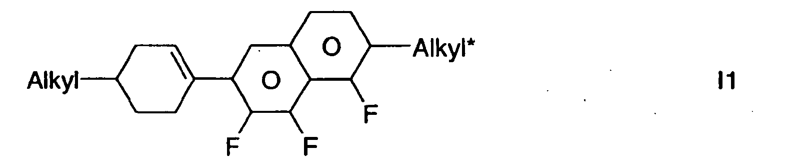 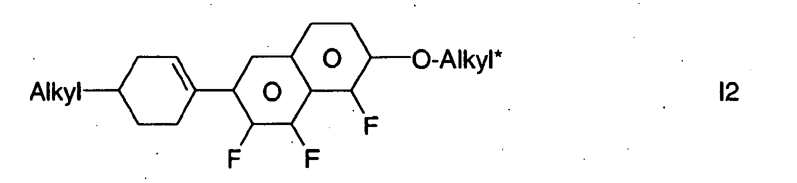 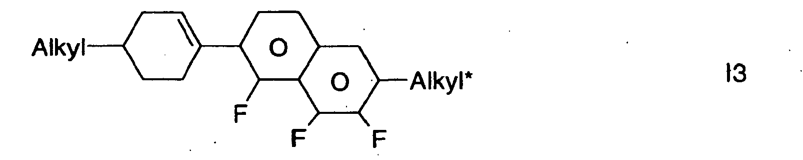 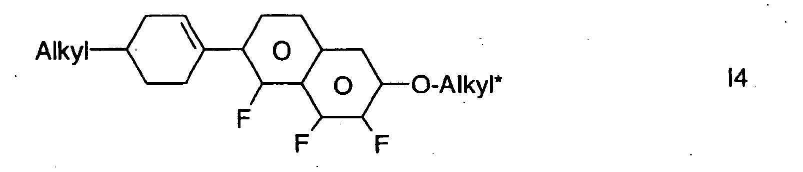 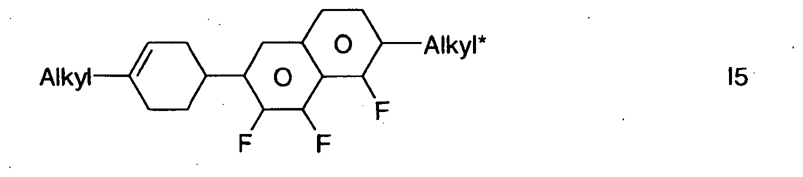 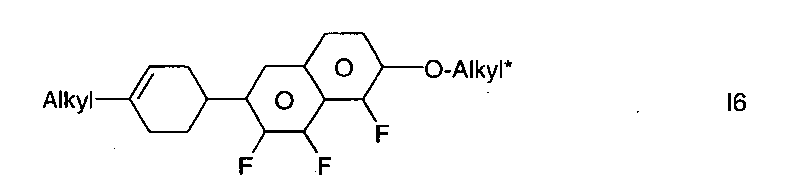 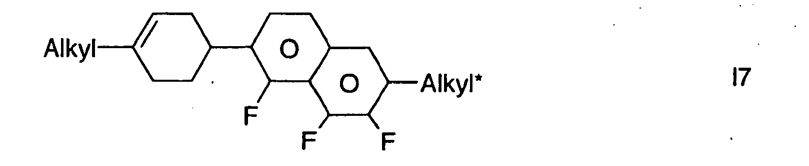 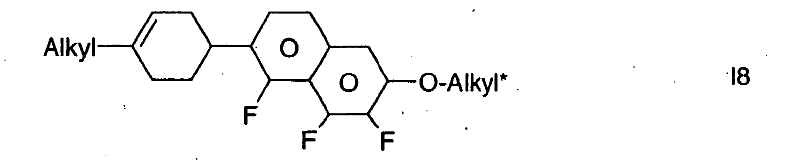 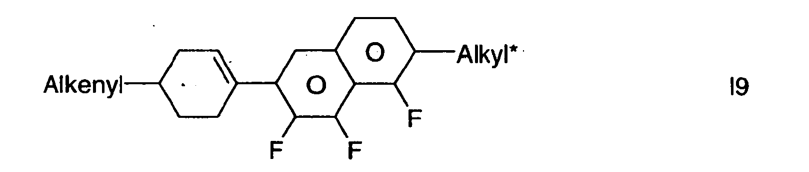 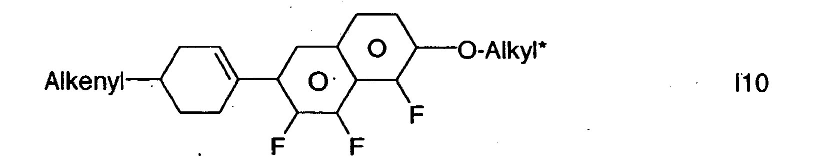 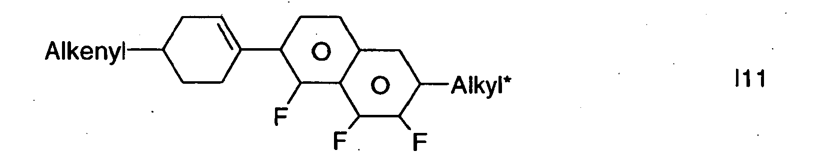 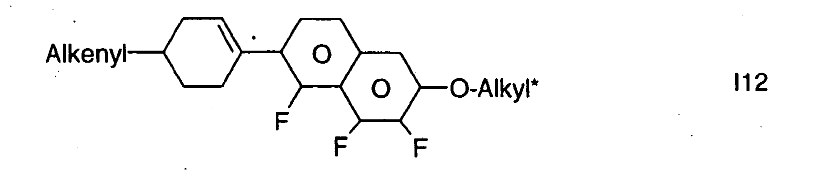 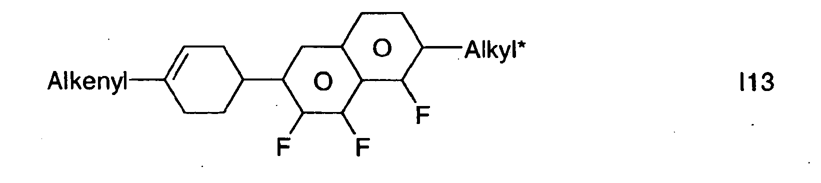 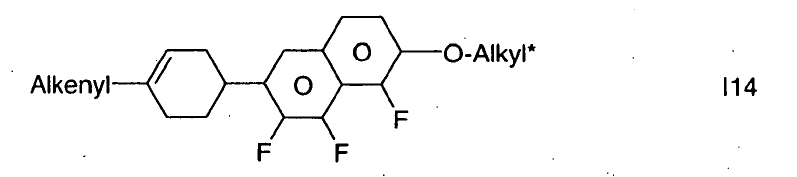 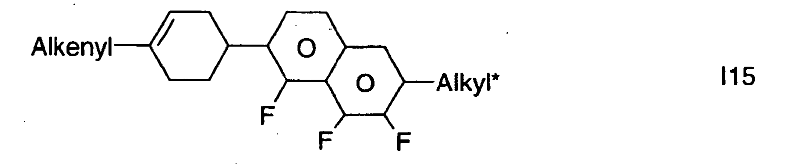 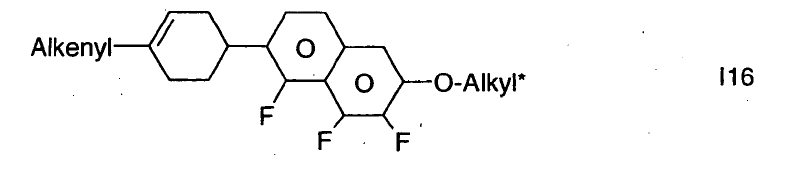 worin
Alkyl und Alkyl* jeweils unabhängig voneinander geradkettiger Alkylrest mit 1-6 C-Atomen und Alkenyl ein geradkettiger Alkenylrest mit 2-6 C-Atomen bedeuten,
enthält.

9. Flüssigkristallines Medium nach einem oder mehreren der Ansprüche 1 bis 8, **dadurch gekennzeichnet, dass** L¹, L², L³ und L⁴ in den Verbindungen der Formeln IIA und/oder IIB jeweils Fluor bedeutet.

10. Flüssigkristallines Medium nach einem oder mehreren der Ansprüche 1 bis 9, **dadurch gekennzeichnet, dass** es
| | |
|---|---|
| 2-20 | Gew.% einer oder mehrerer Verbindungen der Formel I und |
| 20-80 | Gew.% einer oder mehrerer Verbindungen der Formeln IIA und/oder IIB |
enthält bzw. daraus besteht.

11. Verfahren zur Herstellung eines flüssigkristallinen Mediums nach einem oder mehreren der Ansprüche 1 bis 10, **dadurch gekennzeichnet, dass** man eine oder mehrere Verbindungen der Formel I mit einer oder mehreren mesogenen Verbindungen mischt.

12. Verwendung eines flüssigkristallinen Mediums nach einem oder mehreren der Ansprüche 1 bis 10 in einer elektrooptischen Anzeige.

13. Elektrooptische Anzeige mit einer Aktivmatrix-Addressierung basierend auf dem ECB-, PALC-, FFS- oder dem IPS-Effekt, **dadurch gekennzeichnet, dass** sie als Dielektrikum ein flüssigkristallines Medium nach einem oder mehreren der Ansprüche 1 bis 10 enthält.

## Claims

1. Liquid-crystalline medium based on a mixture of polar compounds, **characterised in that** it comprises at least one compound of the formula I, 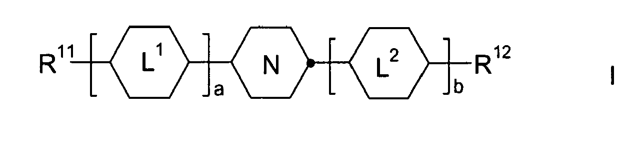 in which
R¹¹ and R¹² each, independently of one another, denote an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 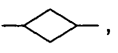 -C≡C-, -CF₂O-, -OC-O- or -O-CO- in such a way that O atoms are not linked directly to one another, 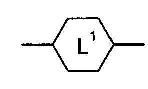 and 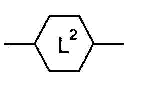 each, independently of one another, denote 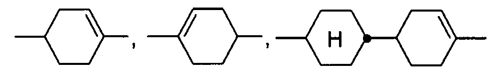 or 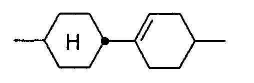 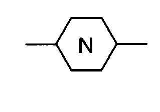 denotes 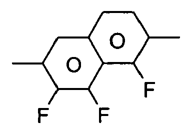 or 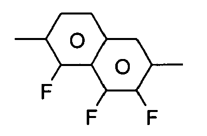
a and b each, independently of one another, denote 0 or 1, where a + b ≥1.

2. Liquid-crystalline medium according to Claim 1, **characterised in that** it additionally comprises one or more compounds of the formulae IIA and/or IIB, 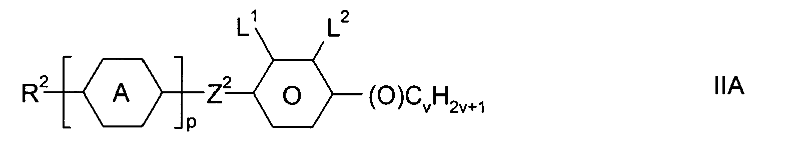 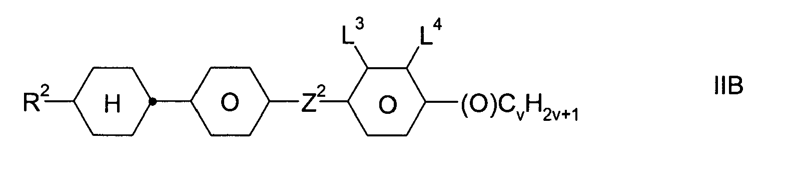 in which 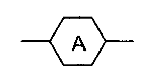
denotes 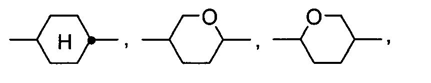 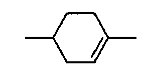 or 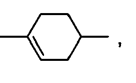
R² denotes an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 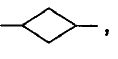 -C≡C-, -CF₂O-, -OC-O- or -O-CO- in such a way that O atoms are not linked directly to one another,
Z² denotes a single bond, -CH=CH-, -CH₂O-, -OCH₂-, -CF₂O-, -OCF₂-, -O-, -CH₂- or -CH₂CH₂-,
p denotes 1 or 2, and
L¹⁻⁴ each, independently of one another, denote F, Cl, OCF₃, CF₃, CH₃, CH₂F, CHF₂, preferably L¹ = L² = F or L³ = L⁴ = F,
v denotes 1 to 6.

3. Liquid-crystalline medium according to Claim 1 or 2, **characterised in that** it additionally comprises one or more compounds of the formula III, 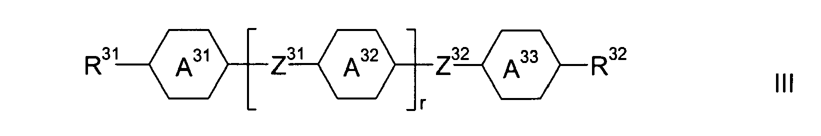 in which
R³¹ and R³² each, independently of one another, denote an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 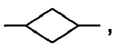 -C≡C-, -OC-O- or -O-CO- in such a way that O atoms are not linked directly to one another, 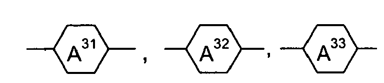 each, independently of one another, denote 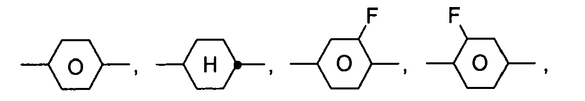 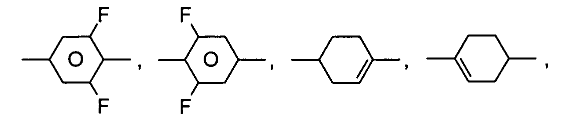 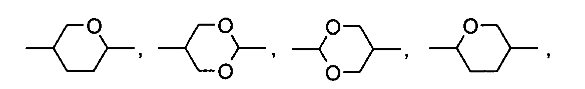 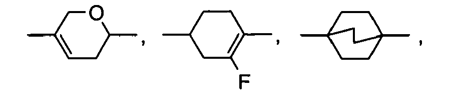
r denotes 0, 1 or 2,
Z³¹ and Z³² each, independently of one another, denote a single bond, -CH₂CH₂-, -C≡C-, -CH=CH-, -CF₂O-, -OCF₂-, -CF=CF-, -CF=CH-, -CH=CF-, -CH₂CF₂-, -CF₂CH₂-, -COO-, -OCO-, -CH₂O-, -OCH₂-, -(CH₂)₄-.

4. Liquid-crystalline medium according to one or more of Claims 1 to 3, **characterised in that** it comprises one, two, three, four or more compounds of the formula I.

5. Liquid-crystalline medium according to one or more of Claims 1 to 4, **characterised in that** the proportion of compounds of the formula I in the mixture as a whole is at least 2% by weight.

6. Liquid-crystalline medium according to one or more of Claims 1 to 5, **characterised in that** the proportion of compounds of the formulae IIA and/or IIB in the mixture as a whole is at least 20% by weight.

7. Liquid-crystalline medium according to one or more of Claims 1 to 6, **characterised in that** the proportion of compounds of the formula III in the mixture as a whole is at least 5% by weight.

8. Liquid-crystalline medium according to one or more of Claims 1 to 7, **characterised in that** it comprises at least one compound selected from the group of the compounds of the formulae 11 to 116, 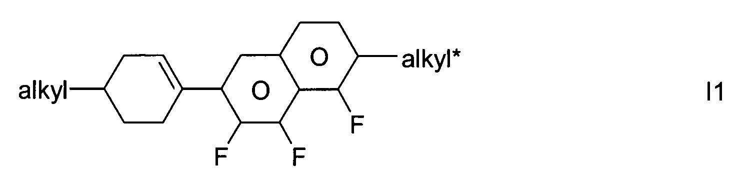 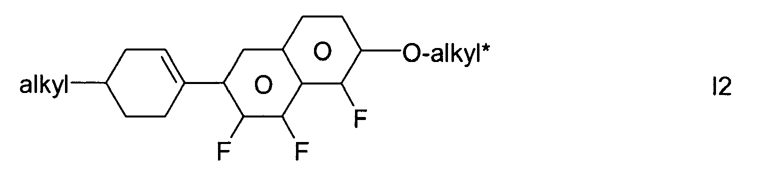 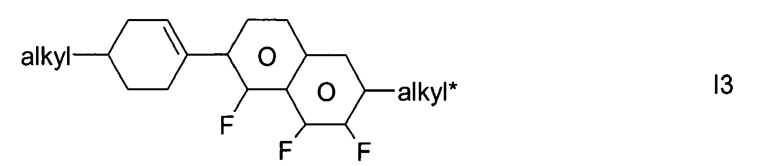 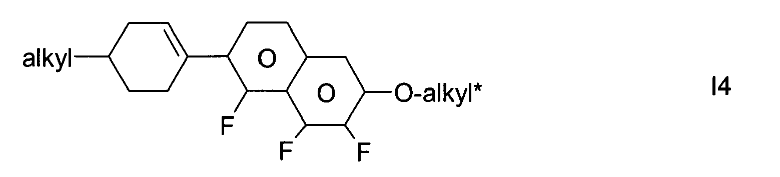 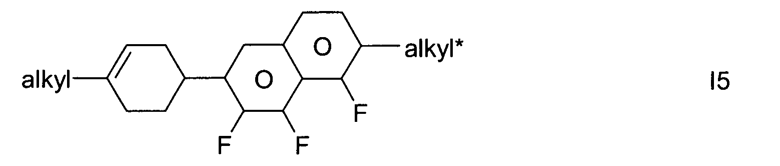 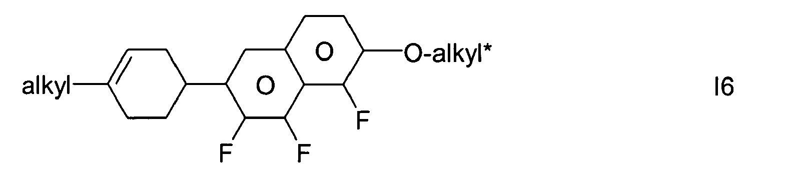 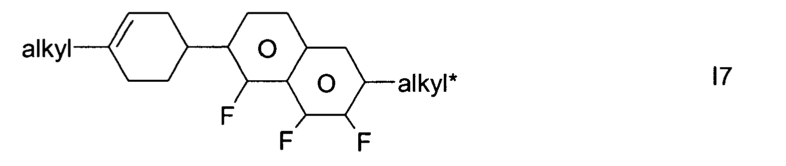 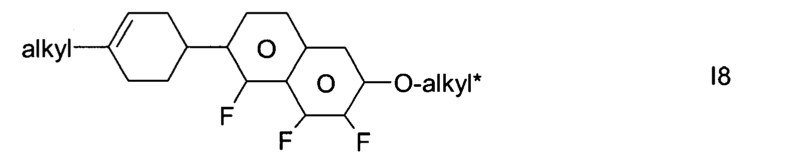 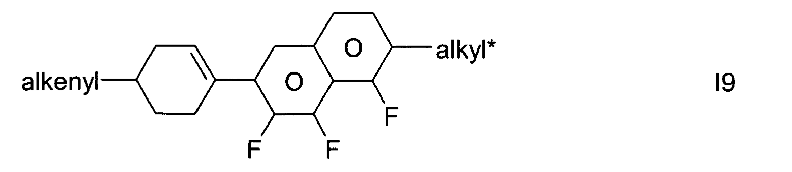 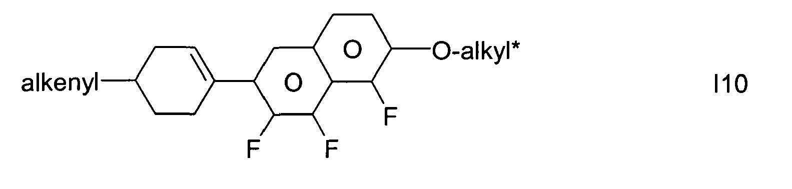 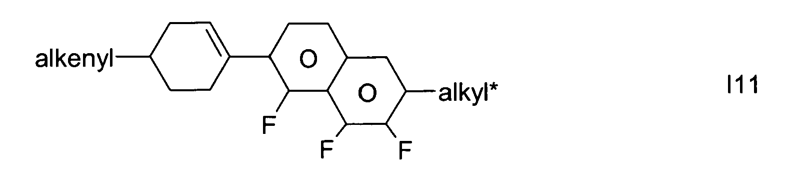 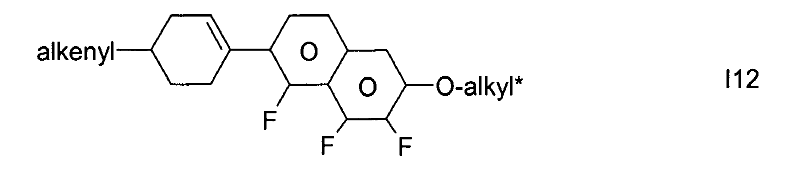 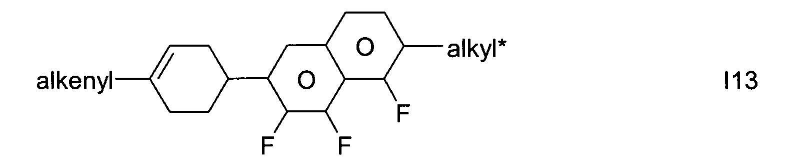 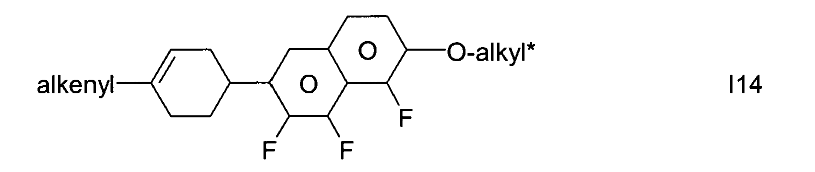 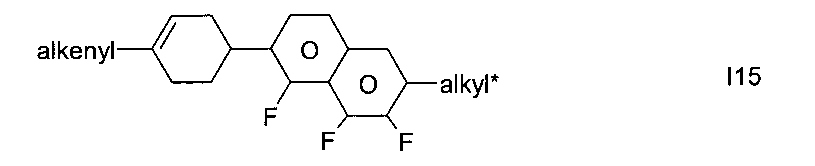 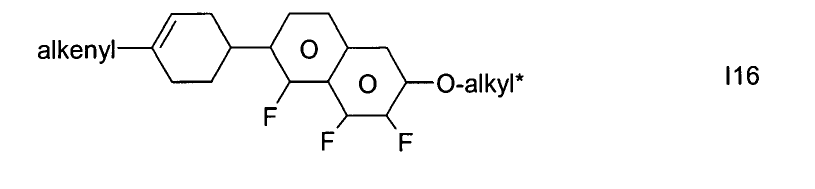 in which
alkyl and alkyl* each, independently of one another, denote a straight-chain alkyl radical having 1-6 C atoms and alkenyl denotes a straight-chain alkenyl radical having 2-6 C atoms.

9. Liquid-crystalline medium according to one or more of Claims 1 to 8, **characterised in that** L¹, L², L³ and L⁴ in the compounds of the formulae IIA and/or IIB each denote fluorine.

10. Liquid-crystalline medium according to one or more of Claims 1 to 9, **characterised in that** it comprises or consists of
| | |
|---|---|
| 2-20% | by weight of one or more compounds of the formula I and |
| 20-80% | by weight of one or more compounds of the formulae IIA and/or IIB. |

11. Process for the preparation of a liquid-crystalline medium according to one or more of Claims 1 to 10, **characterised in that** one or more compounds of the formula I are mixed with one or more mesogenic compounds.

12. Use of a liquid-crystalline medium according to one or more of Claims 1 to 10 in an electro-optical display.

13. Electro-optical display having active-matrix addressing based on the ECB, PALC, FFS or IPS effect, **characterised in that** it contains, as dielectric, a liquid-crystalline medium according to one or more of Claims 1 to 10.

## Revendications

1. Milieu cristallin liquide basé sur un mélange de composés polaires, **caractérisé en ce qu'**il comprend au moins un composé de la formule 1, 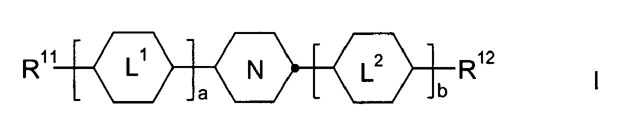 dans laquelle
R¹¹ et R¹² chacun, indépendamment l'un de l'autre, représen- tent un radical alkyle ou alkényle ayant jusqu'à 15 atomes de C qui est non substitué, monosubstitué par CN ou CF₃ ou au moins monosubstitué par halo- gène, où, en addition, un ou plusieurs groupes CH₂ dans ces radicaux peuvent être remplacés par -O-, -S-, 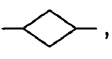 -C≡C-, -CF₂O-, -OC-O- ou -O-CO- de telle sorte que des atomes de O ne soient pas liés directement l'un à l'autre, 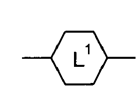 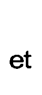 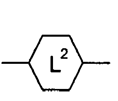 chacun, indépendamment l'un de l'autre, représentent 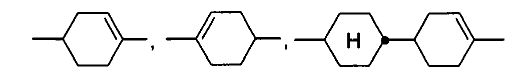 ou 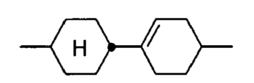 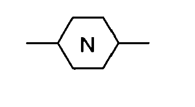 représente 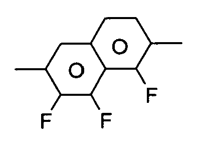 ou 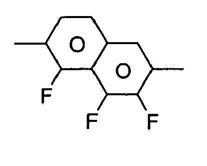
a et b chacun, indépendamment l'un de l'autre, représen- tent 0 ou 1, où a + b ≥1.

2. Milieu cristallin liquide selon la revendication 1, **caractérisé en ce qu'**il comprend additionnellement un ou plusieurs composés des formules IIA et/ou IIB, 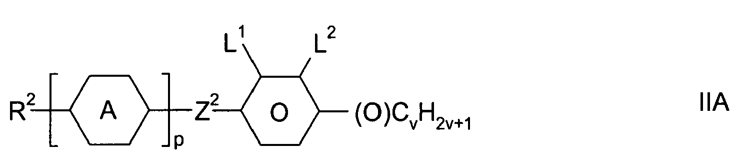 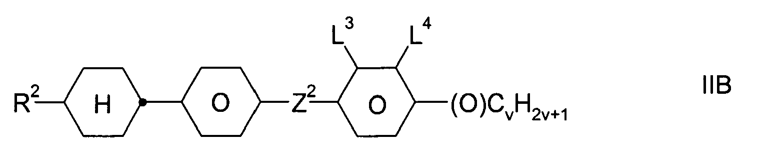 dans lesquelles 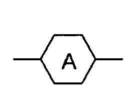
représente 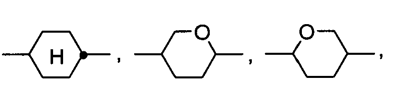 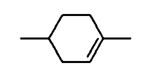 ou 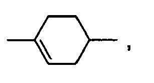
R² représente un radical alkyle ou alkényle ayant jusqu'à 15 atomes de C qui est non substitué, monosubstitué par CN ou CF₃ ou au moins monosubstitué par halo- gène, où, en addition, un ou plusieurs groupes CH₂ dans ces radicaux peuvent être remplacés par -O-, -S-, 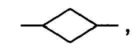 -C≡C-, -CF₂O-, -OC-O- ou -O-CO- de telle sorte que des atomes de O ne soient pas liés directe- ment l'un à l'autre,
Z² représente une liaison simple, -CH=CH-, -CH₂O-, -OCH₂-, -CF₂O-, -OCF₂-, -O-, -CH₂- ou -CH₂CH₂-,
p représente 1 ou 2, et
L¹⁻⁴ chacun, indépendamment l'un de l'autre, représentent F, Cl, OCF₃, CF₃, CH₃, CH₂F, CHF₂, de préférence L¹ = L² = F ou L³ = L⁴ = F,
v représente 1 à 6.

3. Milieu cristallin liquide selon la revendication 1 ou 2, **caractérisé en ce qu'**il comprend additionnellement un ou plusieurs composés de la formule III, 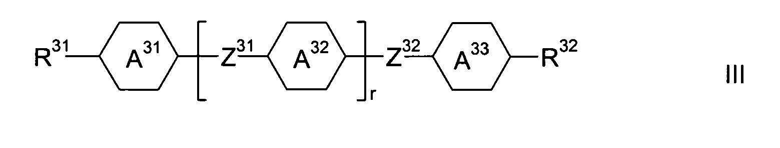 dans laquelle
R³¹ et R³² chacun, indépendamment l'un de l'autre, représen- tent un radical alkyle ou alkényle ayant jusqu'à 15 atomes de C qui est non substitué, monosubstitué par CN ou CF₃ ou au moins monosubstitué par halo- gène, où, en addition, un ou plusieurs groupes CH₂ dans ces radicaux peuvent être remplacés par -O-, -S-, 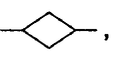 -C≡C-, -OC-O- ou -O-CO- de telle sorte que des atomes de O ne soient pas liés direc- tement l'un à l'autre, 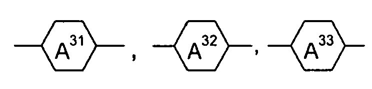 chacun, indépendamment l'un de l'autre, représentent 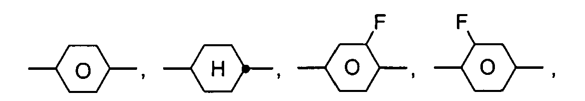 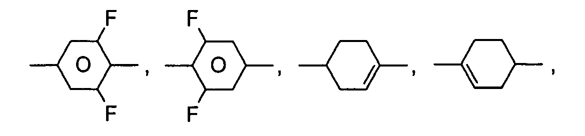 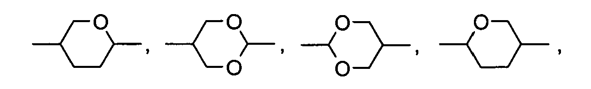 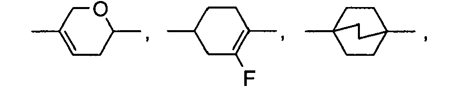
r représente 0, 1 ou 2,
Z³¹ et Z³² chacun, indépendamment l'un de l'autre, représentent une liaison simple, -CH₂CH₂-, -C≡C-, -CH=CH-, -CF₂O-, -OCF₂-, -CF=CF-, -CF=CH-, -CH=CF-, -CH₂CF₂-, -CF₂CH₂-, -COO-, -OCO-, -CH₂O-, -OCH₂-, -(CH₂)₄-.

4. Milieu cristallin liquide selon une ou plusieurs des revendications 1 à 3, **caractérisé en ce qu'**il comprend un, deux, trois, quatre composés ou plus de la formule I.

5. Milieu cristallin liquide selon une ou plusieurs des revendications 1 à 4, **caractérisé en ce que** la proportion de composés de la formule I dans le mélange dans sa totalité est d'au moins 2% en poids.

6. Milieu cristallin liquide selon une ou plusieurs des revendications 1 à 5, **caractérisé en ce que** la proportion de composés des formules IIA et/ou IIB dans le mélange dans sa totalité est d'au moins 20% en poids.

7. Milieu cristallin liquide selon une ou plusieurs des revendications 1 à 6, **caractérisé en ce que** la proportion de composés de la formule III dans le mélange dans sa totalité est d'au moins 5% en poids.

8. Milieu cristallin liquide selon une ou plusieurs des revendications 1 à 7, **caractérisé en ce qu'**il comprend au moins un composé choisi parmi le groupe des composés des formules I1 à I16, 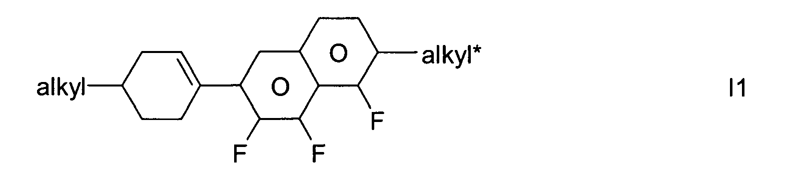 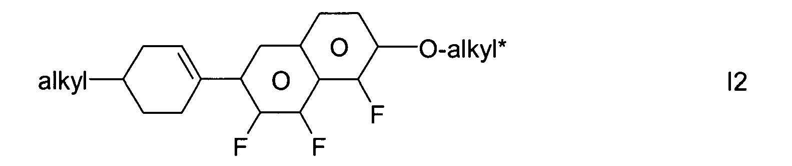 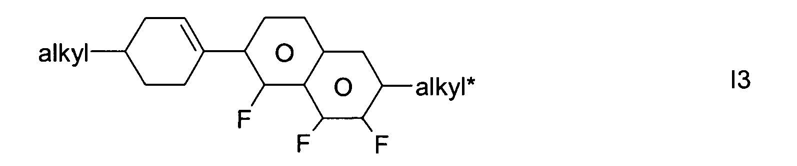 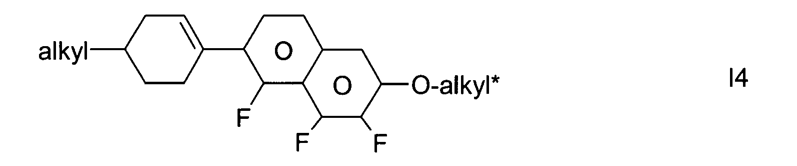 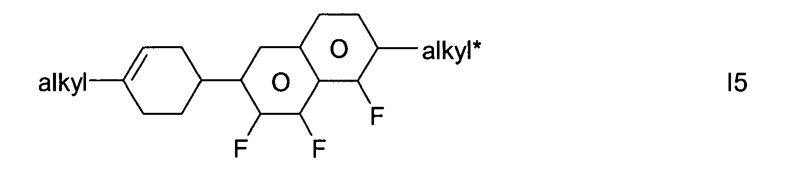 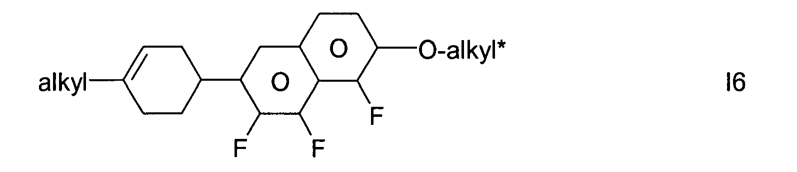 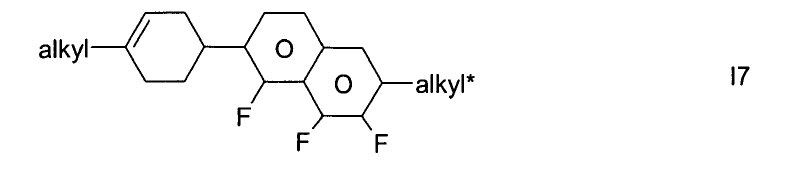 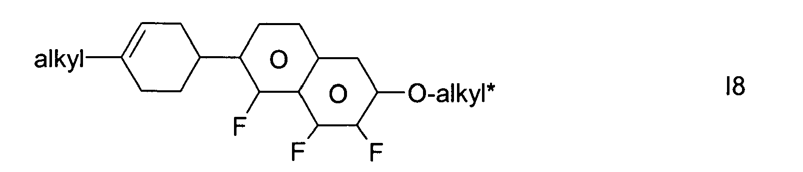 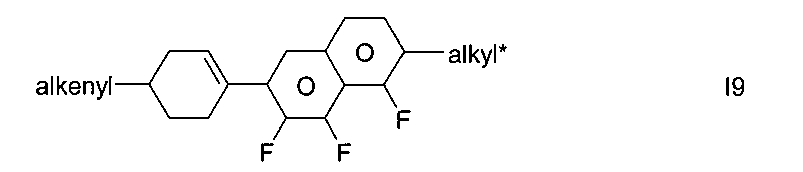 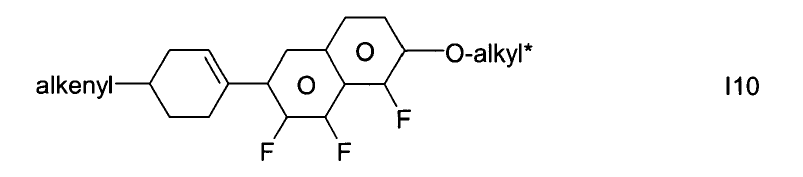 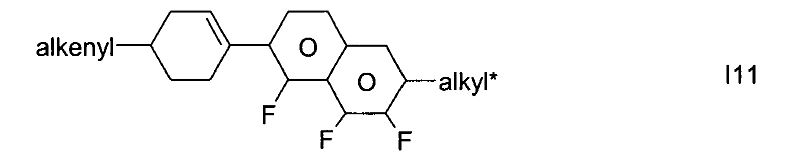 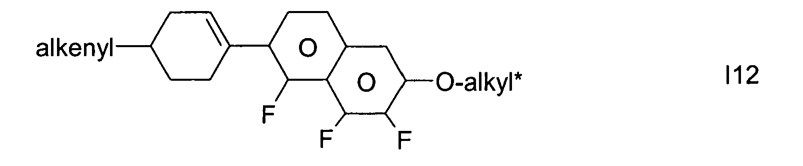 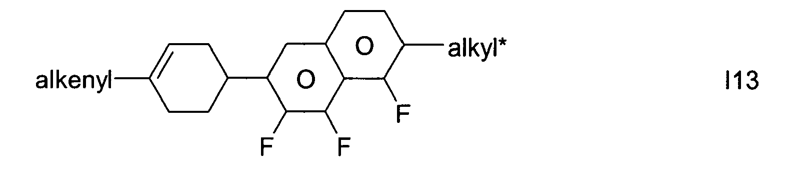 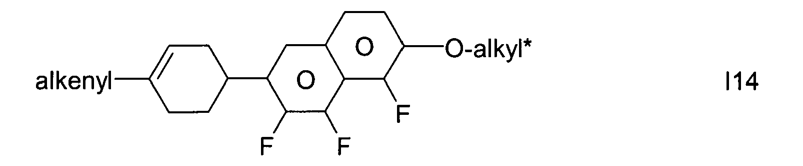 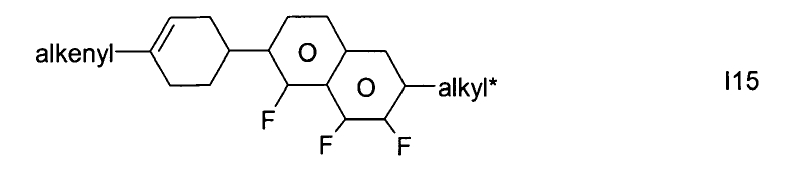 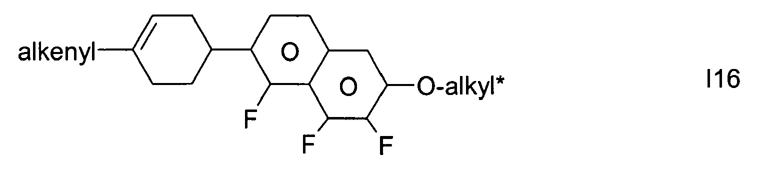 dans lesquelles
alkyl et alkyl* chacun, indépendamment l'un de l'autre, représentent un radical alkyle en chaîne droite ayant 1-6 atomes de C et alkenyl représente un radical alkényle en chaîne droite ayant 2-6 atomes de C.

9. Milieu cristallin liquide selon une ou plusieurs des revendications 1 à 8, **caractérisé en ce que** L¹, L², L³ et L⁴ dans les composés des formules IIA et/ou IIB représentent chacun fluor.

10. Milieu cristallin liquide selon une ou plusieurs des revendications 1 à 9, **caractérisé en ce qu'**il comprend ou est constitué de
| | |
|---|---|
| 2-20% | en poids d'un ou plusieurs composés de la formule I et |
| 20-80% | en poids d'un ou plusieurs composés des formules IIA et/ou IIB. |

11. Procédé pour la préparation d'un milieu cristallin liquide selon une ou plusieurs des revendications 1 à 10, **caractérisé en ce qu'**un ou plusieurs composés de la formule I sont mélangés avec un ou plusieurs composés mésogènes.

12. Utilisation d'un milieu cristallin liquide selon une ou plusieurs des revendications 1 à 10 dans un affichage électro-optique.

13. Affichage électro-optique ayant un adressage par matrice active basé sur l'effet ECB, PALC, FFS ou IPS, **caractérisé en ce qu'**il contient, comme diélectrique, un milieu cristallin liquide selon une ou plusieurs des revendications 1 à 10.
